# EUROPÄISCHE PATENTSCHRIFT

(11) **EP 3 651 585 B1**
(45) Veröffentlichungstag und Bekanntmachung des Hinweises auf die Patenterteilung: **24.03.2021**
(21) Anmeldenummer: 18736923.6
(22) Anmeldetag: 10.07.2018
(51) Int. Cl.: A23G 9/34, A23L 29/212, A23L 29/219

(54) **EIFREIES SPEISEEIS**
EGG-FREE ICE CREAM
CRÈME GLACÉE SANS OEUF

(30) Priorität: 10.07.2017 EP 17180501
(43) Veröffentlichungstag der Anmeldung: 20.05.2020
(73) Patentinhaber: Agrana Stärke GmbH, 1020 Wien (AT)
(72) Erfinder: MOLNAR-WEGERTH, Timea, 7111 Parndorf (AT); GRÜLL, Dietmar, 1020 Wien (AT); WASTYN, Marnik Michel, 1020 Wien (AT)
(74) Vertreter: Sonn & Partner Patentanwälte
(86) Internationale Anmeldenummer: PCT/EP2018/068585
(87) Internationale Veröffentlichungsnummer: WO 2019/011880

(56) Entgegenhaltungen:
- EP-A1- 0 486 936
- DE-A1-102016 002 279
- US-A- 4 510 166
- US-A1- 2013 183 405

## Beschreibung

Die Erfindung betrifft eifreies Speiseeis und Verfahren zu dessen Herstellung.

Im Österreichischen Lebensmittelbuch ist "Speiseeis" definiert als "eine Lebensmittelzubereitung, die durch Gefrieren in einen festen oder halbfesten Zustand gebracht wurde und dazu bestimmt ist, in gefrorenem Zustand verzehrt zu werden. Speiseeis besteht im Wesentlichen aus Wasser, Luft und Trockenstoffen. Beim Gefriervorgang bilden sich bei der Speiseeisherstellung aus diesen Komponenten Eiskristalle, Fettkügelchen und Luftbläschen.

Speiseeis weist einen Luftanteil ("Luftaufschlag") bis zu 50 % auf (Softeis bis zu 70%) und unterscheidet sich dadurch grundlegend von Industrieeis, in welchem der Luftaufschlag standardmäßig 80 bis 100 % beträgt (Werte für den Luftaufschlag sind abhängig von den verwendeten Rohstoffen, eventuellen Hydrokolloiden und den Herstellungsmaschinen).

In Speiseeis liegt die Trockensubstanz idealerweise zwischen 35% und 38%. Die Trockenmasse ist es, die dem Speiseeis die gewünschte Struktur gibt. Die Zusammensetzung der Trockenmasse beeinflusst die Konsistenz, die Cremigkeit, die Menge und die Homogenität der eingeschlagenen Luft, die Ausbildung der Eiskristalle, das Schmelzverhalten und der Geschmack des Speiseeises.

In Handwerksspeiseeissorten, die milch- oder obersbasiert sind, dürfen keine anderen Fette als Milchfett zugesetzt werden, es sei denn, sie werden durch geschmackgebende Zutaten wie z.B. Schokolade oder Haselnüsse eingebracht. Aus diesem Grund werden andere Füllstoffe als pflanzliche Fette eingesetzt, um die Trockensubstanz zu erhöhen. Auch in veganen Fruchteissorten werden Füllstoffe eingesetzt um die gewünschte Trockensubstanz zu erreichen.

Als Füllstoffe werden meist Magermilchpulver oder Vollmilchpulver eingesetzt. Der Nachteil von Magermilchpulver ist, dass sich nicht jedes Pulver ist für die Eisherstellung eignet (nur sprühgetrocknete, feinpulvrige und beinahe farblose Magermilchpulver sind geeignet). Beim Einsatz von Vollmilchpulver ist die Lagerfähigkeit begrenzt. Weiters muss der mit dem Vollmilchpulver angereicherte Eismix mindestens 8 Stunden reifen, was zu einer Inflexibilität und Verlängerung der Speiseeisherstellung führt.

Aufgrund dieser Nachteile sowie der Tatsache, dass Milchpulver nicht vegan ist, werden in der Speiseeis-Herstellung auch andere Füllstoffe eingesetzt. In der US 2013/0183405 A1 wird ein lösliches Hafermehl beschrieben, das (u.a.) zur Eiscremeherstellung verwendet werden kann. Die EP 0 486 936 A1 offenbart eine enzymatisch "entzweigte" Stärke in Form einer kurzkettigen Amylose, die ebenfalls (u.a.) zur Herstellung von Eiscreme verwendet werden kann.

Seit Kurzem wird auch Inulin als Füllstoff in Speiseeis verwendet. Inulin ist ein Gemisch von Polysacchariden aus Fruktose-Bausteinen mit einer Kettenlänge von bis zu 100 Monomeren und einem endständigen Glukoserest. Zunächst diente Inulin aufgrund seiner prebiotischen Eigenschaften (es wurde gezeigt, dass Inulin im Dünndarm von den menschlichen Verdauungsenzymen nicht abgebaut wird, während sie im Dickdarm von der bakteriellen Microflora fermentiert wird) als Zucker-Ersatzstoff für kalorienreduziertes Eis (US 6,916,498 B2, US 2007/0269569 A1, 2009/0202705 A1), jedoch stellte sich Inulin auch prinzipiell aufgrund all seiner Eigenschaften als generell vorteilhafter Füllstoff bei der Speiseeisproduktion heraus, der sogar die Verwendung von Milchpulver bei der Speiseeisherstellung insgesamt obsolet machen kann. Die Zugabe von Inulin zu Speiseeis ergibt eine signifikant erhöhte apparente Viskosität, eine sehr gute Sensorik und eine erhöhte Steifigkeit bei gleichbleibenden Schmelzeigenschaften (vor allem auch nach Lagerung; Akalin et al., J. Food Sci. 2008 May;73(4): M184-8. doi: 10.1111/j.1750-3841.2008.00728.x.). Mit Inulin anstelle von Mager- oder Vollmilchpulver hat man somit nunmehr auch die Möglichkeit, veganes Speiseeis zur Verfügung zu stellen.

Mit Inulin lässt sich auch der Luftaufschlag gegenüber Speiseeis, das mit Magermilchpulver hergestellt wurde, deutlich verbessern. Die optimale Verteilung der Luftbläschen im Speiseeis sorgt für die Cremigkeit im Mund. Je kleiner die Luftbläschen sind, desto cremiger wird das Speiseeis empfunden. Daher hat sich die Verwendung von Inulin als Füllstoff bei der Speiseeisherstellung im Hinblick auf die Sensorik durchaus als "Benchmark" etabliert (und Magermilchpulver in dieser Hinsicht überholt), trotz des vergleichsweise höheren Preises.

In der Speiseeis-Herstellung werden oft zu Naturspeiseeis und zu Premium-Eissorten auch Eier als Rohstoff zugegeben (C. Clark, The Science of Ice Cream, 2004, 49-50; ISBN 0-85404-629-1), nicht nur aus geschmacklichen Gründen, sondern vor allem um Fett und Wasser zu binden (als Emulgatoren) und die Schmelz-Stabilität zu erhöhen. Die Zugabe von Eiern stellt aber - neben all den angeführten Vorteilen - nicht nur eine Gefahrenquelle hinsichtlich mikrobiologischer Lebensmittelsicherheit dar, sie steht auch der Herstellung von veganen Speiseeisprodukten entgegen.

Die Aufgabe der vorliegenden Erfindung ist daher, ein eifreies Speiseeis zur Verfügung zu stellen, insbesondere ein veganes Speiseeis. Dabei soll das erfindungsgemäße Speiseeisprodukt gute sensorische Eigenschaften, ein gutes Schmelzverhalten und einen optimalen Luftaufschlag aufweisen. Eine Aufgabe der Erfindung ist auch, einen alternativen Füllstoff zur Verfügung zu stellen, mit dem die Verwendung bisheriger Füllstoffe, insbesondere (Mager-)Milchpulver oder Inulin, verringert oder vollständig ersetzt werden kann. Die Eigenschaften des so hergestellten Speiseeises sollen zumindest denjenigen entsprechen, die mit herkömmlichen Milchpulvern hergestellt werden; vorzugsweise sollen diese Eigenschaften übertroffen werden, beispielsweise denjenigen entsprechen (oder sogar noch übertreffen), die mit Inulin als Füllstoff erreicht werden. Jedenfalls soll die Verwendung eines neuen Füllstoffs in den erfindungsgemäßen Speiseeisprodukten keine verschlechterten wesentlichen Eigenschaften mit sich bringen. Schließlich soll ein verbessertes Speiseeis auch hinsichtlich seiner Festigkeit im gefrorenen Zustand günstige Eigenschaften haben. Wichtig ist hierbei, dass beim Portionieren das Speiseeis nicht zu fest ist. Demgemäß betrifft die vorliegende Erfindung ein eifreies Speiseeis, umfassend eine enzymatisch verzweigte Stärke, wobei die Stärke
- ein mittleres Molekulargewicht Mw (Gewichtsmittel), gemessen durch Lichtstreuung, von 60 kDa (Kilodalton) bis 3000 kDa, und
- einen Polydispersitätsindex PDI zwischen 1 und 5 aufweist.

Überraschender Weise konnte gemäß der vorliegenden Erfindung auf Basis einer enzymatisch verzweigten Stärke als Füllstoff ein Speiseeisprodukt zur Verfügung gestellt werden, welches optimale Eigenschaften hinsichtlich Sensorik, Viskosität, Schmelzeigenschaften, Luftaufschlag und Luftbläschenverteilung aufweist, die denjenigen entsprechen, die mit Hilfe von Inulin (oder (Mager-) Milchpulver) als Speiseeis-Füllstoff erzielt werden können oder diese sogar noch überragen. Gleichzeitig zeigt das erfindungsgemäße Speiseeis in keiner der wesentlichen Produkteigenschaften derartige Schwächen, dass es für die verbreitete Nutzung in der Speiseeisproduktion ungeeignet ist.

Die Verwendung von enzymatisch verzweigter Stärke gemäß der vorliegenden Erfindung als Füllstoff für die Speiseeisherstellung hat sich als äußerst vorteilhaft herausgestellt, um die Trockensubstanz zu erhöhen, jedoch auch um eine hervorragende Cremigkeit des Speiseeises zu gewährleisten.

Dabei kommt das erfindungsgemäße Speiseeis ohne die Verwendung von Eiern als Emulgatoren oder Geschmackstoffen aus; auch eine Verwendung von pflanzlichen Fetten ist nicht erforderlich.

Obgleich die Verwendung von Stärke oder Stärkeprodukte (Hydrolysate, modifizierte Stärke, Maltodextrine, etc.) zur Speiseeisherstellung schon im Stand der Technik vorgeschlagen wurde (EP 565 596 B1, EP 1 510 134 A2, US 4,376,791 A, US 4,840,813 A, US 4,510,166 A, DE 10 2016 002 279 A1, EP 2 145 546 A1), so weisen Speiseeis-Zubereitungen mit diesen etablierten Stärken oder Stärke-Produkte Eigenschaften auf, die nicht jenen von mit Inulin als Füllstoff hergestellten entsprechen bzw. ist die Vermeidung von Eiern oder Milchpulver als Rohstoffe in Milch- und Fruchteis in der Handwerksspeiseeisbranche nicht möglich. So kann zwar mit ausgewählten Maltodextrinen ein gegenüber natürlichen Stärken erhöhter Luftaufschlag in manchen Speiseeissorten erzielt werden, so sind die so erhältlichen Speiseeise hinsichtlich ihres Schmelzverhaltens und vor allem hinsichtlich ihrer Sensorik deutlich schlechter als die erfindungsgemäßen Speiseeise oder Speiseeise mit Inulin als Füllstoff.

Demgemäß zeigt eine mit Maltodextrinen versetzte Speiseeiszubereitung (wie etwa in der DE 10 2016 002 279 A1 beschrieben) im Vergleich mit der erfindungsgemäßen, enzymverzweigten Stärke, deutlich schlechtere Eigenschaften (s. direkter Vergleich der erfindungsgemäß verwendeten enzymatisch verzweigten Stärke mit den Maltodextrinen DE 6 und DE 19). Tatsächlich zeigte sich die enzymatisch abgebaute Stärke als Füllstoff (gemäß der DE 10 2016 002 279 A1) gegenüber der enzymatisch verzweigten Stärke gemäß der vorliegenden Erfindung deutlich unterlegen. Weiters unterscheidet sich die erfindungsgemäß verwendete Stärke auch durch ihre niedrige Polydispersität und dem höheren Anteil an α-1,6-glykosidischer Verknüpfungen strukturell grundlegend von Maltodextrinen und Dextrinen.

So wird mit der erfindungsgemäß verwendeten Stärke ein guter Luftaufschlag erreicht, der zwar in einzelnen Eissorten etwas variiert, jedoch immer eine homogene Verteilung der Luftbläschen im Speiseeis erzielt wird. In diesen Eigenschaften ist das erfindungsgemäße Speiseeis sogar deutlich besser als Speiseeis mit Inulin und Magermilchpulver als Füllstoffen, es weist feine, homogen verteilte Lufteinschlüsse auf, wie sie bei hochviskosen Flüssigkeiten auftreten. Dadurch wird auch ein optimaler Erstarrungspunkt aufgrund der Abwesenheit der niedermolekularen Zucker und der kleinen Polydispersität der Molekulargewichtsverteilung ermöglicht und es tritt keine Viskositätsausbildung auf.

Deutlich besser als die Inulin- und Magermilch-Speiseeise ist das erfindungsgemäße Speiseeis auch hinsichtlich der Schmelzeigenschaften. So schmilzt das erfindungsgemäße Speiseeis deutlich langsamer und gleichmäßiger als Inulin- und Magermilch-Speiseeise.

Auch die Viskositäts-Eigenschaften des erfindungsgemäßen Speiseeises sind hervorragend: während eine hohe Viskosität (wie z.B. mit Wachsmaisstärke) unerwünscht ist, da dadurch das Speiseeis klumpig wird und geschmacklich an Wert verliert, entspricht die Viskosität des erfindungsgemäßen Speiseeises etwa derjenigen einiger besonderen Maltodextrinen, liegt jedoch deutlich unter jener von Inulin oder gar Magermilchpulver als Füllstoff.

Vor allem aber ist das erfindungsgemäße Speiseeis von seinen sensorischen Eigenschaften den vergleichbaren SpeiseeisProdukten überlegen: so enthält das erfindungsgemäße Speiseeis deutlich weniger sensorisch wahrnehmbare Eiskristalle und hat bessere Geschmackseigenschaften.

Der Kern der vorliegenden Erfindung ist die Verwendung einer speziellen Stärke, der enzymverzweigten Stärke (s. EP 2 455 436 A1; syn. f. enzymmodifizierte Stärke (EMS)), welche sich besonders durch eine einheitliche Molekulargewichtsverteilung und eine - im Vergleich zu anderen Stärken - niedrige Polydispersität (also vergleichsweise eine sehr homogene Molekulargewichtsverteilung aufweist).

Stärke ist ein Polymer aus Glucoseeinheiten, welche durch alpha-1,4-glycosidische und alpha-1,6-glycosidische Bindungen verknüpft sind. Höher verzweigte Stärke weist zusätzliche alpha-1,6-glycosidische Verknüpfungen auf. Grundsätzlich werden zwei Fraktionen der Stärke unterschieden, nämlich Amylose und Amylopektin. Amylose besteht aus nahezu unverzweigten Ketten von Anhydroglukoseeinheiten (AGU), die vorzugsweise durch alpha-1,4-glycosidische Verknüpfungen verbunden sind. Bei Amylopektin sind in gleicher Weise zahlreiche Anhydroglukoseeinheiten miteinander verknüpft, nur sind die Molmasse und die Zahl der Verzweigungen deutlich höher. Der Verzweigungsgrad des natürlichen Amylopektins beträgt in der Regel ca. 3-4%, demzufolge entfallen von 100 Bindungen zwischen den Anhydroglukoseeinheiten 96- 97 auf alpha-1,4-Bindungen und 4- 3 auf alpha-1,6-Bindungen. Die Menge des Amylopektins überwiegt bei weitem bei den technisch verwendeten Stärkearten und beträgt meist etwa 80%. So ist beispielsweise der Anteil von Amylose in Mais 23%, in Weizen 19%, in Reis 14%, in Kartoffeln 18% und in Wachsmaisstärke ca. 3% (Durchschnittswerte) .

Neben dem unterschiedlichen Verzweigungsgrad ist auch der Polymerisierungsgrad von Amylopektin und Amylose unterschiedlich. Z.B. liegen in Maisstärke die Polymerisierungsgrade (Zahl der verknüpften Anhydroglukoseeinheiten pro Stärkemolekül) bei Amylose zwischen 260 und 800 und bei Amylopektin zwischen 280 bis 35 000. Bei Kartoffelstärken liegen höhere Polymerisierungsgrade vor: bei Amylose von 240 bis 3 800 und für Amylopektin zwischen 1 100 und 220 000.

Native Stärke kommt in der Natur in Stärkegranulat bzw. - korn vor und wird für verschiedene industrielle Anwendungen gegebenenfalls aufgeschlossen. Da native Stärke nicht wasserlöslich ist, wird sie bei erhöhter Temperatur oder durch Alkalieinwirkung in eine lösliche Form überführt. Dennoch ist die Amylosefraktion meist schlecht wasserlöslich und nach Abkühlung können sich kristalline Aggregate durch Wasserstoffbrückenbildung bilden. Dieser Prozess wird als Retrogradation bezeichnet. Amylopektin ist im Allgemeinen besser löslich und weniger für Retrogradation anfällig. Dennoch kann auch bei Amylopektinstärken keine Langzeitstabilität einer Lösung erzielt werden.

Stärken werden industriell in nativer Form, aber auch in modifizierter Form verwendet, oft als Stärkehydrolysate (wie z.B. Maltodextrinen), jedoch auch als auf andere Art modifizierte Stärken. Stärken können durch eine Vielzahl von physikalischen, enzymatischen oder chemischen Verfahren modifiziert werden, wobei aber die Kornstruktur derartig gewonnener Stärke-Erzeugnisse erhalten bleibt. Die Modifizierung dient im Allgemeinen dazu, erhöhten technischen Anforderungen gerecht zu werden. Demgemäß werden modifizierte Stärken in der Lebensmittelindustrie vorwiegend deshalb eingesetzt, da sie gegenüber natürlicher Stärke oft eine bessere Hitzestabilität, Säurestabilität, Scherstabilität, sowie ein besseres Gefrier- und Auftauverhalten aufweisen. Leider sind aber die einzelnen Vorteile, je nach Modifikation der Stärke (auch abhängig der Natur der Ausgangsstärke), sehr unterschiedlich ausgeprägt, so dass bei einer bestimmten modifizierten Stärke zwar eine Verbesserung der einen Eigenschaft erreicht wird (z.B. Hitzestabilität), jedoch in einer anderen Eigenschaft (z.B. Scherstabilität oder Gefrierverhalten) Einbußen hingenommen werden müssen. Auch besteht vor allem in der Lebensmittelindustrie oft die Gefahr, dass durch die Modifizierung der Stärke die geschmacklichen oder sensorischen Eigenschaften der nativen Stärke verloren gehen oder aber so verschlechtert werden, dass eine Verwendung dieser modifizierten Stärken in Lebensmitteln nicht mehr möglich oder zielführend ist.

Demgemäß war es durchaus überraschend, dass sich die im Rahmen der vorliegenden Erfindung zur Anwendung kommende enzymatisch verzweigte Stärke als optimaler Füllstoff bei der Speiseeisherstellung herausgestellt hat, womit eine Alternative gegenüber den "Benchmarks" der Inulin-basierten Speiseeise oder der Magermilchpulver-basierten Speiseeise zur Verfügung gestellt werden kann, der in vielen Bereichen bzw. bei vielen SpeiseeisSorten diese Benchmarks sogar übertreffen kann.

Bei der Molmassenbestimmung von Stärke müssen zwei wesentliche Verfahren unterschieden werden, nämlich die Bestimmung der Molmasse durch Lichtstreuung und die Bestimmung der Molmasse relativ zu bekannten Standardsubstanzen (konventionelle SEC). In beiden Fällen werden die Moleküle in einem Säulensystem mit poröser Füllung nach ihrem hydrodynamischen Volumen (Molekülgröße in Lösung) aufgetrennt und anschließend mittels eines Konzentrationsdetektors, im Speziellen eines RI (Refraktions-Index) Detektors, analysiert. Das so erhaltene Eluogramm (Signalintensität gegen Elutionsvolumen) kann mit Hilfe von Standards bekannter und enger Molmassenverteilung (im Speziellen mit Pullulanstandards) kalibriert werden. Wird zusätzlich zu dem Konzentrationsdetektor ebenfalls noch ein Molmassensensitiver Detektor (wie z.B. ein Multi Angle Laser Light Scattering oder MALLS Detektor) verwendet, kann die Molmasse aus den Signalen der beiden Detektoren direkt bestimmt werden. Da sich die erfindungsgemäß enzymatisch verzweigten Stärkederivate im Elutionsverhalten stark von linearen Molekülen, welche als Standards Verwendung finden, unterscheiden, ist die Auswertung der Molmassenbestimmung durch das Lichtstreuverhalten bevorzugt.

In bevorzugten Ausführungsformen ist die mittlere Molmasse Mw (Gewichtsmittel) der Stärke, gemessen durch Lichtstreuung, von 60 kDa bis 3000 kDa, insbesondere bevorzugt ist, dass die mittlere Molmasse Mw mindestens 70 kDa, insbesondere bevorzugt mindestens 80 kDa, mindestens 90 kDa, mindestens 100 kDa, mindestens 105 kDa, mindestens 110 kDa, mindestens 115 kDa, mindestens 120 kDa, mindestens 125 kDa, mindestens 130 kDa, beträgt. Weiters bevorzugt ist, dass das mittlere Molekulargewicht Mw der Stärke, gemessen durch Lichtstreuung, kleiner gleich 3000 kDa, kleiner gleich 2900 kDa, kleiner gleich 2800 kDa, kleiner gleich 2700 kDa, kleiner gleich 2600 kDa, kleiner gleich 2500 kDa, kleiner gleich 2400 kDa, kleiner gleich 2300 kDa, kleiner gleich 2200 kDa, kleiner gleich 2100 kDa, kleiner gleich 2000 kDa, kleiner gleich 1900 kDa, kleiner gleich 1800 kDa, kleiner gleich 1700 kDa, kleiner gleich 1600 kDa, kleiner gleich 1500 kDa, kleiner gleich 1400 kDa, kleiner gleich 1300 kDa, kleiner gleich 1200 kDa, kleiner gleich 1100 kDa, kleiner gleich 1000 kDa, kleiner gleich 900 kDa, kleiner gleich 800 kDa, kleiner gleich 700 kDa, kleiner gleich 600 kDa, kleiner gleich 500 kDa, kleiner gleich 400 kDa, kleiner gleich 300 kDa, kleiner gleich 200 kDa, kleiner gleich 170 kDa, kleiner gleich 150 kDa, kleiner gleich 140 kDa, kleiner gleich 135 kDa, kleiner gleich kDa, kleiner gleich 125 kDa, kleiner gleich 120 kDa, kleiner gleich 115 kDa kleiner gleich 110 kDa, ist.

Eine weitere Kenngröße der erfindungsgemäßen enzymatisch modifizierten Stärke ist der Polydispersitätsindex, PDI, welcher durch das Verhältnis Mw/Mn bestimmt wird. Die Polydispersität entspricht der Breite der Verteilung des Molmassenprofils einer heterogenen, also nicht einheitlichen, Stärke. Jedoch kann festgehalten werden, dass relativ zu anderen Stärken, insbesondere zu Ausgangsstärken, die erfindungsgemäß verwendete enzymatisch modifizierte (verzweigte) Stärke hoch homogen ist. Der Polydispersitätsindex PDI der erfindungsgemäß verwendeten Stärkeprodukte ist üblicherweise zwischen 1 und 5. In speziell bevorzugten Ausführungsformen ist der Polydispersitätsindex kleiner als 4, kleiner als 3,5, kleiner als 3, kleiner als 2,5, kleiner als 2,25, kleiner als 2, kleiner als 1,9, kleiner als 1,8, kleiner als 1,7, kleiner als 1,6, kleiner als 1,5, kleiner als 1,4, wobei hierbei die Molmassen Mw und Mn ermittelt durch Lichtstreuung herangezogen werden. Ähnliche aber leicht höhere Polydispersitätsindizes können bei der Molmassenbestimmung durch konventionelle SEC erhalten werden. Hierbei sind vorzugsweise die Polydispersitätsindizes vorzugsweise kleiner als 5, kleiner als 4,5, kleiner als 4, kleiner als 3,75, kleiner als 3,5, kleiner als 3,25, kleiner als 3, kleiner als 2,75, kleiner als 2,5, kleiner als 2,25, kleiner als 2. Vorzugsweise weist das Molmassenprofil, z.B. nach Größenausschlusschromatographie, nur einen einzigen Peak mit einer monomodalen Molmassenverteilung auf, insbesondere bevorzugt wie in den Figuren 1 und 2 der EP 2 455 436 A1 dargestellt. In bevorzugten Ausführungsformen sind mindestens 50% (Gewichts-%) der Stärke, vorzugsweise mindestens 60%, mindestens 70%, mindestens 80% oder mindestens 90%, diesem Peak zuzuordnen.

Neben dem Gewichtsmittel der Molmasse (Mw) ist auch das Zahlenmittel der Molmasse (Mn) charakteristisch für eine Stärkezusammensetzung. Das Zahlmittel ist kleiner als das Gewichtsmittel aufgrund der schwächeren Gewichtung der höher molekularen Stärkemoleküle.

In speziellen Ausführungsformen der vorliegenden Erfindung wird demgemäß eine enzymatisch verzweigte Stärke verwendet, die eine mittlere Molmasse Mn (Zahlmittel) von 40 kDa bis 600 kDa aufweist, ermittelt durch Lichtstreuung. Besonders bevorzugte Eigenschaften hat die erfindungsgemäß modifizierte Stärke bei einer mittleren Molmasse Mn (Zahlmittel) ab 40 kDa, ermittelt durch Lichtstreuung. In speziell bevorzugten Ausführungsformen ist die mittlere Molmasse Mn mindestens 45 kDa, mindestens 50 kDa, mindestens 53 kDa, mindestens 55 kDa, mindestens 60 kDa, ermittelt durch Lichtstreuung. Als Obergrenze ist in vorzugsweisen Ausführungsformen die mittlere Molmasse Mn kleiner gleich 600 kDa, kleiner gleich 550 kDa, kleiner gleich 500 kDa, kleiner gleich 450 kDa, kleiner gleich 400 kDa, kleiner gleich 350 kDa, kleiner gleich 300 kDa, kleiner gleich 250 kDa, kleiner gleich 200 kDa, kleiner gleich 150 kDa, kleiner gleich 100 kDa, kleiner gleich 90 kDa, kleiner gleich 85 kDa, kleiner gleich 80 kDa, kleiner gleich 70 kDa, ermittelt durch Lichtstreuung.

Sofern als Referenz die konventionelle SEC mit Pullulanstandards herangezogen werden soll, ist in vorzugsweisen Ausführungsformen die mittlere Molmasse Mn der erfindungsgemäßen Stärken größer gleich 10 kDa, größer gleich 11 kDa, größer gleich 12 kDa, größer gleich 13 kDa, größer gleich 14 kDa. Gemäß diesen Ausführungsformen ist die mittlere Molmasse vorzugsweise kleiner gleich 50 kDa, kleiner gleich 40 kDa, kleiner gleich 30 kDa, kleiner gleich 20 kDa, ermittelt durch konventionelle SEC mit Pullulankalibration.

Gemäß einer vorteilhaften Ausführungsformen haben die im Rahmen der vorliegenden Erfindung verwendeten Stärken einen DE (Dextroseequivalent)-Wert von kleiner gleich 1. Das Dextrose-Äquivalent (DE) eines Polysaccharid-Gemischs bezeichnet den prozentualen Anteil reduzierender Zucker an der Trockensubstanz. Es entspricht der Menge Glucose (= Dextrose), die je 100 g Trockensubstanz das gleiche Reduktionsvermögen hat. Der DE-Wert ist ein Maß dafür, wie weit der hydrolytische Polymerabbau erfolgt ist, daher erhalten Produkte mit niedrigem DE-Wert einen hohen Anteil an Polysacchariden und einen niedrigen Gehalt an niedermolekularen Zuckern, während Erzeugnisse mit hohem DE-Wert hauptsächlich nur noch aus niedermolekularen Zuckern bestehen. Das Dextrose-Äquivalent von Stärke beträgt 0, das von Glucose 100. Das von Maltodextrin liegt je nach Hydrolysegrad zwischen 3 und 20. Produkte mit DE-Werten über 20 werden den Glukosesirupen zugerechnet.

Der äußerst niedrige DE-Wert der erfindungsgemäß verwendeten Stärkederivate zeigt, dass die Stärkemoleküle sich von Stärkemolekülen, welche durch hydrolytische Spaltung - wie bei den alpha-Amylasen - erhältlich sind (z.B. Maltodextrine), unterscheiden. In speziellen Ausführungsformen ist der DE-Wert kleiner gleich 1, kleiner gleich 0,9, kleiner gleich 0,8, kleiner gleich 0,7, kleiner gleich 0,6, kleiner gleich 0,5, kleiner gleich 0,4, kleiner gleich 0,35, kleiner gleich 0,3, kleiner gleich 0,25, kleiner gleich 0,2 oder kleiner gleich 0,1. Der DE-Wert kann beispielsweise durch im Stand der Technik übliche Methoden wie z.B. nach Fehling bestimmt werden. Alternativ kann für die Bestimmung geringer Anteile an reduzierenden Enden auch die modifizierte Park-Johnson-Methode von Hizukuri et al. (Carbohydrate Research, 94 (1981): 205-213) verwendet werden. Besonders auffällig ist, dass die erfindungsgemäß verwendeten Stärkederivate, wie oben erwähnt, eine äußerst homogene Molmassenverteilung zeigen, die man durch die eingesetzte Enzymmenge und die Reaktionszeit gezielt einstellen kann. Ohne auf eine bestimmte Theorie limitiert zu sein, scheint es, dass große Stärkemoleküle somit in Richtung dieses kleineren Bereichs zerteilt und kleinere Stärkemoleküle zusammengefügt werden, wobei alle Stärkemoleküle zusätzlich verzweigt werden und somit einen höheren Verzweigungsgrad als die Ausgangsstärke aufweisen.

Ein weiterer vorzugsweiser Vorteil der erfindungsgemäß verwendeten enzymatisch modifizierten Stärken ist, dass sie farbneutral bzw. weiß sind. Dies ist natürlich speziell in der Lebensmittelindustrie, insbesondere bei der Speiseeisherstellung, ein Vorteil bzw. eine Voraussetzung, z.B. gegenüber modifizierten Stärken, die eine Eigenfarbe haben (z.B. Röst-Dextrinen). Der Farbeindruck "weiß" entspricht einem subjektiven Empfinden eines Menschen, dass alle drei Zapfen in der Netzhaut des Auges in gleicher Weise und mit ausreichend hoher Intensität gereizt werden. Zur Farbdarstellung wurde daher das RGB-System entwickelt, welches das Verhalten an der Netzhaut wiederspiegelt. "Rein Weiß" ist gemäß dem RGB System 1,0, 1,0, 1,0 (oder 100%, 100%, 100%), für den roten, grünen und blauen Lichtanteil. Gemäß der vorliegenden Erfindung soll unter "weiß" bzw. "farbneutral" verstanden werden, wenn diese Lichtanteile annähernd gleich sind, insbesondere innerhalb von 5%, vorzugsweise 3%, im speziellen innerhalb 1%, maximaler Abweichung zueinander.

Die erfindungsgemäßen modifizierten Stärken, welche sich für das erfindungsgemäße Speiseeis eignen, weisen vorzugsweise keine oder geringe Anteile zyklischer Strukturen auf bzw. sind im Wesentlichen frei von zyklischen Strukturen. In speziellen Ausführungsformen weist die Stärke insbesondere weniger als 8% zyklische Strukturen auf. Als eine zyklische Stärkestruktur werden alle Glucoseeinheiten des Stärkemoleküls verstanden, welche in einer Ringstruktur involviert sind. Seitenketten, verzweigt oder linear, werden nicht als Ringstruktur angesehen, sofern innerhalb dieser Seitenketten kein Ringschluss vorkommt. Demgemäß ist insbesondere der Anteil an Anhydroglukoseeinheiten in zyklischen Rest-Strukturen der Stärke nach Behandlung mit Glukoamylase geringer als 8% der Stärkemasse.

Vorzugsweise unterscheidet sich die erfindungsgemäß modifizierte Stärke in diesem Bereich nicht von herkömmlichen Stärkeprodukten, z.B. Maltodextrinen. Nach Entfernung der Verzweigungen durch z.B. Glukoamylase bilden die erfindungsgemäßen Stärken und herkömmliche Maltodextrine ähnliche Rückstände.

Im Wesentlichen frei von zyklischen Strukturen wird eine erfindungsgemäße enzymatisch modifizierte Stärke angesehen, wenn der Anteil an Glucoseeinheiten zyklischen Strukturen geringer als 8% der Stärkemasse, vorzugsweise geringer als 7,5%, geringer als 6%, geringer als 5,5%, geringer als 5%, geringer als 4,75%, geringer als 4,5%, geringer als 4,25%, geringer als 4%, geringer als 3,75%, geringer als 3,5%, geringer als 3,25%, geringer als 3%, geringer als 2,75%, geringer als 2,5%, geringer als 2,25%, geringer als 2%, geringer als 1,75%, geringer als 1,5%, geringer als 1,25%, geringer als 1%, geringer als 0,75%, geringer als 0,5%, geringer als 0,25%, geringer als 0,1% oder sogar 0%, ist. Bei der Ermittlung des Anteils an Glukoseeinheiten in zyklischen Stärkestrukturen versteht sich, dass nur ein solcher Anteil gewertet werden kann, welcher über dem Blindwert des Messverfahrens liegt. Der Blindwert kann anhand bekannter nichtzyklischer Stärkestrukturen ermittelt werden. Passende Referenzstärken sind daher normalerweise die Ausgangsstärken, welche als Ausgangsstoff für die erfindungsgemäße enzymatische Modifizierung der Stärke mit einem Verzweigungsenzym zur Herstellung der erfindungsgemäßen Stärke dient.

In anderen Ausführungsformen können in der Stärke zyklische Strukturen enthalten sein. Zyklische Strukturen können durch geeignete Enzyme, wie beispielsweise Zyklodextringlucanotransferasen oder dergleichen, eingebracht werden. In bestimmten Ausführungsformen kann die Stärke daher von 0,1% bis 15%, vorzugsweise 0,5% bis 11%, insbesondere bevorzugt 1% bis 8 %, im speziellen bevorzugt 2% bis 5%, zyklische Ringstrukturen enthalten.

Bei stärker verzweigten Stärken mit geringeren Molmassen werden in der Regel höhere Anteile an zyklischen Nebenprodukten toleriert, sodass vorzugsweise bei Stärken mit einer Molmasse von weniger als 60 kDa (mittlere Molmasse Mn), bestimmt durch Lichtstreuung, unabhängig von den oben genannten Gesamtanteilen an Glukoseeinheiten in zyklischen Stärkestrukturen, der Anteil der Glukoseeinheiten in zyklischen Stärkestrukturen, vorzugsweise geringer als 10%, geringer als 9,5%, geringer als 9%, geringer als 8,5%, geringer als 8%, geringer als 7%, geringer als 6%, geringer als 5%, oder geringer also die oben genannten Anteile, ist.

Durch den erfindungsgemäßen Einsatz eines Verzweigungsenzyms wird der Verzweigungsgrad der Stärke erhöht. Der Verzweigungsgrad wird mittels NMR-Analyse ermittelt. Eine allgemeine Beschreibung zur Ermittlung von Verzweigungsgraden von Stärkeprodukte bietet Nilsson, et al. (Starch/Stärke (1996) 48, Nr. 10. S. 352-357).

In bevorzugten Ausführungsformen liegt der Verzweigungsgrad von alpha-1,6-Verzweigungen zwischen 4 und 12%. Insbesondere bevorzugt ist ein Verzweigungsgrad von mindestens 4%, mindestens 4,5%, mindestens 5%, mindestens 5,5%, mindestens 6%, mindestens 6,5%, mindestens 7%, mindestens 7,5%. Insbesondere, wird der Verzweigungsgrad einer Ausgangsstärke durch die erfindungsgemäße Modifizierung erhöht, nämlich vorzugsweise um mindestens 1%, insbesondere bevorzugt mindestens 2%, mindestens 3%, mindestens 4%, mindestens 5%, mindestens 6%. In besonders bevorzugten Ausführungsformen sind alle Verzweigungen ausschließlich alpha-1,6-glykosidische Bindungen.

Die Ausgangsstärke, die Basis für die erfindungsgemäße enzymatische Modifizierung, kann jede herkömmliche Knollen-, Getreide- oder Leguminose-Stärke sein, z.B. Erbsenstärke, Maisstärke, inkl. Wachsmaisstärke, Kartoffelstärke, Amaranthstärke, Reisstärke, inkl. Wachsreisstärke, Weizenstärke, inkl. Wachsweizenstärke, Gerstenstärke, inkl. Wachsgerstenstärke, Tapiokastärke, Sagostärke. Stärken natürlichen Ursprungs haben in der Regel einen Amylosegehalt von 20 % bis 30 %, abhängig von der Pflanzenart, aus der sie gewonnen werden. Es gibt aber auch amylopektinreiche Stärken, welche einen deutlich erhöhten Amylopektingehalt aufweisen, bzw. Produkte, welche einen erhöhten Amylosegehalt enthalten. Neben den natürlichen bzw. den durch Züchtungsmaßnahmen erhaltenen amylopektinreichen Stärketypen und Hochamylosetypen gibt es auch über chemische und/oder physikalische Fraktionierung gewonnene bzw. über gentechnisch veränderte Pflanzen hergestellte amylopektinreiche Stärken, die u.a. durch Unterdrückung der Amyloseproduktion erhalten werden. Bekannt sind amylopektinreiche Getreidestärken auf Basis von Maisstärke (Wachsmaisstärke), Reisstärke, Weizenstärke und Gerstenstärke. Neuerungen auf dem Gebiet der amylopektinreichen Stärken stellen amylopektinreiche Kartoffelstärke und amylopektinreiche Tapiokastärke dar. Insbesondere bevorzugt sind Stärken mit hohem Amylopektingehalt, insbesondere Stärken mit mindestens 80%, insbesondere mindestens 85%, mindestens 88%, mindestens 90%, mindestens 92%, mindestens 94%, mindestens 95%, mindestens 96%, mindestens 97%, mindestens 98%, mindestens 99%, mindestens 99,5% Amylopektin. Amylopektin ist bereits eine verzweigte Stärke und die erfindungsgemäße enzymatische Modifizierung mit einem Verzweigungsenzym kann diese bereits nativ hohe Verzweigung weiter erhöhen. Wachsmaisstärke wird besonders bevorzugt.

Da Stärke naturgemäß heterogen ist, kann auch bei erfindungsgemäß hergestellten enzymatisch verzweigten Stärken für die Speiseeisherstellung neben den Stärkemolekülen im erfindungsgemäß bevorzugten Bereich mit den oben genannten Eigenschaften auch andere Stärkemoleküle vorkommen. In bevorzugten Ausführungsformen ist der Anteil an enzymatisch modifizierter Stärke, wie oben definiert, mindestens 50% (Gew.-%) der im Speiseeis vorhandenen Stärke.

Vorzugsweise ist dieser Anteil dieser enzymatisch modifizierten Stärke mindestens 55%, mindestens 60%, mindestens 65%, mindestens 70%, mindestens 75%, mindestens 80%, mindestens 85% der Stärkezusammensetzung.

Die erfindungsgemäß verwendete Stärke wird durch ein Verzweigungsenzym modifiziert, wodurch der Verzweigungsgrad im Vergleich zu (herkömmlich) modifizierter Stärke erhöht wird und/oder die Polydispersität im Vergleich zu unmodifizierter Stärke erniedrigt wird. Insbesondere ist das Verzweigungsenzym eine 1,4-α-D-glucan: 1,4-α-D-glucan 6-α-D-(1,4-α-D-glucano)-transferase (E.C. 2.4.1.18). Im Stand der Technik sind diverse Verzweigungsenzyme bekannt, welche in der Lage sind Stärke weiter durch die Umwandlung von α1,4-glucosidischen Bindungen zu α1,6-Bindungen zu erhöhen. Verzweigungsenzyme sind aus diversen Quellen bekannt, z.B. aus Kartoffel, Bacillus sp., Streptomyces sp., E.Coli, Pseudomonas sp., Hefe wie beispielsweise Candida, Kluyveromyces, Pichia, Saccharomyces, Schizosaccharomyces oder Yarrowia, Pilzen wie beispielsweise Acremonium, Aspergillus, Aureobasidium, Cryptococcus, Filibasidium, Fusarium, Humicola, Magnaporthe, Mucor, Myceliophthora, Neocallimastix, Neurospora, Paecilomyces, Penicillium, Piromyces, Schizophyllum, Talaromyces, Thermoascus, Thielavia, Tolypocladium, oder Trichoderma. Insbesondere bevorzugt ist ein Verzweigungsenzym aus Rhodothermus sp., z.B. Rhodothermus Obamensis oder Rhodothermus Marinus. Durch Auswahl geeigneter Mengen des Verzweigungsenzyms bzw. der Quelle können die erfindungsgemäß verzweigten Stärken hergestellt werden. Gegebenenfalls könnte die erfindungsgemäße Stärke als Fraktion eines Verzweigungsprodukts nach Behandlung einer Ausgangsstärke mit dem Verzweigungsenzym isoliert werden. Besonders bevorzugt ist die Verwendung eines Verzweigungsenzyms aus Rhodothermus sp.. Diese Enzyme haben eine spezielle katalytische Eigenschaft und ein spezielles Temperaturoptimum über 60°C, das eine wirtschaftlich realistische Produktion ermöglicht. Ohne auf eine spezielle Theorie limitiert zu sein, wird davon ausgegangen, dass bei einer Reaktion über 60°C auch andere Verzweigungsreaktionen ablaufen, und dass die Stärken, welche mittels eines Verzweigungsenzyms von Rhodothermus sp. oder einem anderen thermophilen Organismus mit einem Verzweigungsenzym, welches ein Temperaturoptimum von mindestens 60°C aufweist, auch unterschiedliche Stärkeprodukte erhalten. Diese sind besonders bevorzugt für die vorliegende Erfindung. Insbesondere bevorzugt wird die Verzweigungsreaktion bei einer Temperatur von mindestens 20°C, mindestens 30°C, mindestens 40°C mindestens 50°C, mindestens 55°C, mindestens 60°C, mindestens 65°C, mindestens 70°C, mindestens 75°C, mindestens 80°C vorgenommen. Die Verzweigungsreaktion wird vorzugsweise an Stärke im Gelzustand bzw. verkleisterter Stärke, insbesondere in wässriger Lösung, vorgenommen. Die in einer solchen Reaktion erhältlichen Stärken können im erfindungsgemäßen Speiseeis eingesetzt werden.

Die enzymatische Aktivität von Enzymen wird üblicherweise in enzymatischen Einheiten, E.U oder nur U, angegeben. Für eine Verzweigungsreaktion wird treffenderweise, insbesondere dann wenn das Enzym auch andere Reaktionen katalysieren kann, die Aktivität in "Branching Enzyme Units" - BEU angegeben. Eine Methode zur Messung dieser speziellen Enzymaktivität wurde von Takata et al. beschrieben (Applied and Environmental microbiology (1994), Vol. 60, No. 9, S. 3097). In der Materials and Methods Section wird unter der Überschrift "Branching Enzyme activity" der entsprechende "Assay A" gut erläutert. Der Assay beruht auf der Einwirkung des Verzweigungsenzyms auf eine definierte Amylosetype und der Abnahme der Absorptionsintensität des Amylose-Iod-Komplexes. Vorzugsweise werden Verzweigungsenzyme in ausreichender Menge für eine Aktivität von 50 bis 20 000 BEU pro Gramm der eingesetzten Stärke eingesetzt. Insbesondere bevorzugt sind Aktivitäten von mindestens 80 BEU, mindestens 100 BEU, mindestens 120 BEU, mindestens 200 BEU, mindestens 250 BEU, mindestens 300 BEU, mindestens 400 BEU, mindestens 500 BEU, mindestens 600 BEU, mindestens 700 BEU, mindestens 800 BEU pro Gramm Stärke. In weiteren Ausführungsformen ist die Aktivität bis zu 1500 BEU, bis zu 1800 BEU, bis zu 2000 BEU, bis zu 2500 BEU, bis zu 3000 BEU, bis zu 4000 BEU, bis zu 5000 BEU, bis zu 6000 BEU bis zu 7000 BEU, bis zu 8000 BEU, bis zu 9000 BEU, bis zu 10000 BEU, bis zu 12000 BEU, bis zu 14000 BEU, bis zu 16000 BEU, bis zu 18000 BEU, oder bis zu 20000 BEU pro Gramm Stärke.

Die im erfindungsgemäßen Speiseeis verwendete Stärke ist gewöhnlicherweise im Wesentlichen frei von niedermolekularen Oligosacchariden mit einem Polymerisationsgrad von kleiner als 3. Vorzugsweise ist der Anteil der niedermolekularen Oligosaccharide weniger als 5 Gewichts-% der Stärkemasse. In besonders bevorzugten Ausführungsformen kann dieser Anteil an niedermolekularen Oligosacchariden auch weniger als 4%, weniger als 3%, weniger als 2%, weniger als 1%, weniger als 0,5%, weniger als 0,1%, weniger als 0,05%, betragen. Vorzugsweise wird ein Verzweigungsenzym eingesetzt, das diese geringen Anteile an niedermolekularen Oligosacchariden produziert. Alternativ, sofern niedermolekulare Oligosaccharide vorhanden sind, können diese gegebenenfalls abgetrennt werden.

Im Speziellen wurde erfindungsgemäß festgestellt, dass die enzymatisch verzweigte Stärke eine hohe Wasserlöslichkeit aufweist, insbesondere sind mindestens 75% (Gew.-%), in besonderen Ausführungsformen mindestens 85%, speziell bevorzugt mindestens 95%, der Stärke bei 25°C wasserlöslich.

In speziellen Ausführungsformen ist die Stärke - abgesehen von natürlichen Modifizierungen, wie Phosphatveresterung, und der erfindungsgemäßen Modifizierung durch künstliche Verzweigung - nicht weiter modifiziert. Vorzugsweise weist die Stärke Säuregruppen auf, sowohl in protonierter, deprotonierter Form oder in Form eines Salzes. Solche Gruppen können z.B. ausgewählt sein aus Phosphat, Phosphonat, Sulfat, Sulfonat oder Carbonsäuregruppen, insbesondere bevorzugt Phosphat oder Carbonsäuregruppen. Vorzugsweise ist der Anteil an Säuregruppen pro Stärkemolekül zwischen 0,01 bis 4, vorzugsweise 0,05 bis 3 bzw. 0,1 bis 2,5, 0,5 bis 2, 0,75 bis 1,5 oder 0,8 bis 1,25.

Das eifreie Speiseeis gemäß der vorliegenden Erfindung ist nicht auf eine besondere Eissorte beschränkt, obgleich die Kompatibilität der enzymverzweigten Stärke mit den übrigen Speiseeis-Grundlagen von Sorte zu Sorte variieren kann. Demgemäß kann das erfindungsgemäße Speiseeis vorzugsweise ausgewählt sein aus Vanilleeis, Zitroneneis, Amarettoeis, Ananaseis, Apfeleis, Aprikoseneis, Apfelstrudeleis, Bananeneis, Brownieeis, Birneneis, Brombeereis, Buttermilcheis, Basilikumeis, Casheweis, Cheesecakeeis, Caipirinhaeis, Cassiseis, Eierpunscheis, Eierliköreis, Erdbeereis, Erdnusseis, Fioccoeis, Grapefruiteis, Haferflockeneis, Haselnusseis, Heidelbeereis, Himbeereis, Holunder(blüten)eis, Joghurteis, Kaffeeeis, Karameleis, Kirscheis, Kiwieis, Kokoseis, Käsesahneeis, Kürbiseis, Limetteneis, Macadamiaeis, Malagaeis, Mandarineneis, Mangoeis, Maracujaeis, Marilleneis, Maronieis, Marzipaneis, Mandeleis, Mascarponeeis, Meloneneis, Mohneis, Minzeis, Nougateis, Nusseis, Orangeneis, Pfirsicheis, Pina Colada-Eis, Pistazieneis, Preiselbeereis, Pekannusseis, Pinienkerneis, Pralineneis, Quitteneis, Ribiseleis, Rüblieis, Rum-Krokanteis, Roseneis, Sanddorneis, Schokoladeneis, Stracciatellaeis, Sahnejoghurteis, Sauerrahmeis, Schmandeis, Schwarzwälder-Kirscheis, Schafsmilcheis, Tiramisueis, Topfeneis, Traubeneis, Trüffeleis, Tonkabohneneis, Weichseleis, Walnusseis, Wassermeloneneis, Weintraubeneis, Zwetschkeneis, Ziegenmilcheis, Zitroneneis, Zimteis oder Mischungen davon.

Besonders vorteilhaft ist die vorliegende Erfindung bei Vanilleeis oder bei den Fruchteissorten, wie z.B. Erdbeer, Zitrone und Apfel.

Gemäß einem weiteren Aspekt betrifft die vorliegende Erfindung ein Verfahren zur Herstellung des erfindungsgemäßen eifreien Speiseeis, umfassend die Schritte:
- Bereitstellen einer enzymatisch verzweigten Stärke, wobei die Stärke ein mittleres Molekulargewicht Mw (Gewichtsmittel), gemessen durch Lichtstreuung, von 60 kDa bis 3000 kDa, und einen Polydispersitätsindex PDI zwischen 1 und 5 aufweist,
- Bereitstellen von Speiseeiskomponenten,
- Vermengen der Speiseeiskomponenten und der enzymatisch verzweigten Stärke, gegebenenfalls unter Erhitzen, wobei ein Speiseeis-Mix erhalten wird,
- Einfrieren des Speiseeis-Mix durch Abkühlen auf eine geeignete Temperatur und für einen geeigneten Zeitraum, so dass ein Speiseeis entsteht.

Dabei können herkömmliche Speiseeis-Vorrichtungen und Verfahrensführungen zur Herstellung von Speiseeis herangezogen werden. Erfindungsgemäß wird dabei die enzymmodifizierte Stärke als Füllstoff eingesetzt und damit andere Füllstoffe wie (Mager-) Milchpulver oder Inulin zumindest teilweise ersetzt. Die enzymatisch modifizierte Stärke eignet sich sowohl für die kalte Herstellung, als auch für die Kurzzeit- und für die Langzeitpasteurisierung.

Vorzugsweise wird der Speiseeis-Mix auf eine Temperatur von zumindest 60°C, vorzugsweise von zumindest 70°C, insbesondere von zumindest 80°C, erhitzt.

Gemäß einer bevorzugten Ausführungsform wird der Speiseeis-Mix in eine Eismaschine überführt und bei einer Wandtemperatur von zumindest -3°C, vorzugsweise von zumindest -5°C, insbesondere von zumindest -8°C, eingefroren.

Die bereitgestellten Speiseeiskomponenten können teilweise in flüssiger Form vorliegen und teilweise in fester Form, wobei vorzugsweise zunächst die trockenen Komponenten miteinander vermengt werden und die flüssigen Komponenten miteinander vermengt werden, worauf die vermengten trockenen Komponenten in die vermengten flüssigen Komponenten unter Erhalt eingerührt werden, wobei der Speiseeis-Mix erhalten wird.

Gemäß einer bevorzugten Ausführungsform erfolgt das Vermengen der Speiseeiskomponenten und der enzymatisch verzweigten Stärke unter Rühren bei zumindest 1000 Umdrehungen pro Minute (UpM), vorzugsweise bei zumindest 2000 UpM, insbesondere bei zumindest 3000 UpM.

Die vorliegende Erfindung wird weiters durch die folgenden Figuren und Beispiele näher erläutert, ohne darauf beschränkt zu sein.

Es zeigen:
Fig. 1 zeigt den Luftaufschlag bei Vanilleeis mit unterschiedlichen Füllstoffen.
Fig. 2 zeigt den Luftaufschlag bei Zitroneneis mit unterschiedlichen Füllstoffen.
Fig. 3 zeigt die Luftbläschenverteilung im Vanilleeis mit unterschiedlichen Füllstoffen: Agenanova (Fig. 3A), Maltodextrin DE1 (Fig. 3B), Maltodextrin DE19 (Fig. 3C), Maltodextrin DE6 (Fig. 3D), Inulin (Fig. 3E), Magermilchpulver (Fig. 3F) und native WMS (Fig. 3G).
Fig. 4 zeigt die Eiskristalle im Vanilleeis mit unterschiedlichen Füllstoffen: Agenanova (Fig. 4A), Maltodextrin DE1 (Fig. 4B), Maltodextrin DE19 (Fig. 4C), Maltodextrin DE6 (Fig. 4D), native WMS (Fig. 4E), Inulin (Fig. 4F), Magermilchpulver (Fig. 4G) und ohne Füllstoff (Fig. 4H).
Fig. 5 zeigt die Festigkeit des Vanilleeises mit unterschiedlichen Füllstoffen (WMS; 20.222 = Maltodextrin DE19, 20.226 = Maltodextrin DE6, MMP = Magermilchpulver.
Fig. 6 zeigt die Ergebnisse der Melt down Untersuchungen zum Vanilleeis mit unterschiedlichen Füllstoffen (geschmolzenes Vanilleeis [%] im Verlauf von 0,5h - 3h).

### BEISPIELE

### Einleitung:

In Speiseeis liegt die Trockensubstanz idealerweise zwischen 35% und 38%. Die Trockenmasse ist es, die dem Speiseeis die gewünschte Struktur gibt. Die Zusammensetzung der Trockenmasse beeinflusst die Konsistenz, die Cremigkeit, die Menge und die Homogenität der eingeschlagenen Luft, die Ausbildung der Eiskristalle, das Schmelzverhalten und der Geschmack des Speiseeises.

In Handwerksspeiseeissorten, die milch- oder obersbasiert sind, dürfen keine anderen Fette als Milchfett zugesetzt werden, es sei denn, sie werden durch geschmackgebende Zutaten wie z.B. Schokolade oder Haselnüsse eingebracht. Aus diesem Grund werden andere Füllstoffe als pflanzliche Fette eingesetzt um die Trockensubstanz zu erhöhen. Auch in veganen Fruchteissorten werden Füllstoffe eingesetzt um die gewünschte Trockensubstanz zu erreichen.

Als Füllstoffe werden zum Beispiel Magermilchpulver, Vollmilchpulver und Inulin eingesetzt. Der Nachteil von Magermilchpulver ist, dass sich nicht jedes Pulver ist für die Eisherstellung eignet (nur sprühgetrocknete, feinpulvrige und beinahe farblose Magermilchpulver sind geeignet). Beim Einsatz von Vollmilchpulver ist die Lagerfähigkeit begrenzt weiters muss der mit dem Vollmilchpulver angereicherte Eismix mindestens 8 Stunden reifen, was zu einer Unflexibilität und Verlängerung der Speiseeisherstellung führt.

Aufgrund dieser Nachteile sowie der Tatsache, dass Milchpulver nicht vegan ist, werden gerne andere Füllstoffe eingesetzt. Demgemäß wird erfindungsgemäß eine enzymatisch verzweigte Stärke eingesetzt, wobei die erfindungsgemäße Stärke ein mittleres Molekulargewicht Mw (Gewichtsmittel), gemessen durch Lichtstreuung, von 60 kDa bis 3000 kDa, und einen Polydispersitätsindex PDI zwischen 1 und 5 aufweisen soll.

Im Rahmen der vorliegenden Versuche wird der Einsatz dieser enzymatisch verzweigten Stärke im Vergleich mit anderen Füllstoffen, insbesondere mit Milchpulver oder Inulin, jedoch auch mit anderen Stärken, untersucht. Im Rahmen dieser Untersuchungen zeigte sich überraschender Weise, dass sich die erfindungsgemäß eingesetzte enzymatisch verzweigte Stärke - im Gegensatz zu den anderen Stärken, die für die Eisherstellung vorgeschlagen worden sind - hervorragend als Füllstoff für Speiseeis eignet und den derzeit bevorzugten Füllstoffen, wie Milchpulver oder Inulin, in vielen Eigenschaften zumindest gleichwertig, in einigen zentralen Eigenschaften sogar überlegen ist. Mit der vorliegenden Erfindung lässt sich daher ein Speiseeis herstellen, bei dem auf Ei-Zusatz und Milchpulver-Zusatz gänzlich verzichtet werden kann (und dass somit vegan ist), und dass auch durchaus ebenbürtig, wenn nicht sogar überlegen gegenüber der Verwendung von Inulin als Füllstoff ist.

### Ziel:

Test und Beurteilung von enzymmodifizierter Stärke (EMS; Agenanova 30.326) als Füllstoff in Milch- und Fruchteis.

### Herstellung von Vanilleeis:

Ein Vanilleeis wird mit folgender - einheitlicher - Basisstruktur hergestellt (Tabelle 1A und 1B), bei der nur jeweils unterschiedliche Füllstoffe zum Einsatz kommen:

**Tabelle 1A: Vanilleeis-Zusammensetzung mit unterschiedlichen Füllstoffen**

| Zutaten | Mengenangaben [Gew%] |
|---|---|
| Milch | 61,33 |
| Schlagobers | 12,27 |
| Vanille Paste | 1,96 |
| Zucker | 13,49 |
| Dextrose | 2,70 |
| Magermilchpulver | 3,43 |
| **Füllstoff** | **1,72** |
| Milchbase 30 (getr. Glukosesirup, Magermilchpulver, Guarkernmehl, Johannisbrotkernmehl) | 2,94 |
| Zitronenabrieb | 0,05 |
| Salz | 0,10 |
| **Gesamt** | **100** |

### Herstellung von Zitroneneis

**Tabelle 1B: Vanilleeis-Zusammensetzung mit unterschiedlichen Füllstoffen**

| Zutaten | Mengenangaben [Gew%] |
|---|---|
| Wasser | 48,31 |
| Zitronensaft | 19,32 |
| Zucker | 22,95 |
| Trockenglukosesirup DE30 | 3,62 |
| Dextrose | 1,21 |
| **Füllstoff** | **1,45** |
| Frucht Base 30 (getr. Dextrose, getr. Glukosesirup DE30, Guarkernmehl, Johannisbrotkernmehl) | 2,90 |
| Guarkernmehl | 0,10 |
| Zitronensäure | 0,14 |
| **Gesamt** | **100** |

Die Füllstoffe, die im Rahmen der vorliegenden Untersuchungen verwendet wurden waren die Folgenden:

### Agenanova: erfindungsgemäße enzymmodifizierte Stärke

**Tabelle 1C: Füllstoffe**

| | **Agenanova 20.326** |
|---|---|
| Molmasse Mw [Da] | 105.000 |
| Polydispersität | 1,5 |
| | |
| DE-Wert | <0,1 |
| Glukose [%] | <0,1 |
| Maltose [%] | <0,1 |
| Maltotriose [%] | <0,1 |
| Maltotetraose [%] | <0,1 |
| Maltopentaose [%] | <0,1 |
| | |
| Viskosität 50%ig 24h [mPas] | 5500 |
| Verzweigungsgrad [% Alpha-1,6] | 7,5 |

### Inulin (Vergleichsversuche zu US 6,916,498 B2 et al.):

**Tabelle 1D: Inulin**

| | Fibruline® Instant |
|---|---|
| Hersteller | Cosucra Groupe Warcoing S.A. |
| Polymerisationsgrad | ∼10 |
| Dichte | ∼0,6 kg/l |
| Korngrößenverteilung | <500 µm |
| pH (30% in Wasser) | ∼6,0 |
| Löslichkeit | ≥ 100 g/l |

### Maltodextrin DE 1:

**Tabelle 1E: Maltodextrin DE 1**

| | Glucidex 1 |
|---|---|
| Hersteller | Roquette |
| Trockenmasse | 95% |
| Dextrose Äquivalent | ≤ 5 |
| Korngröße 250 µm | ≤ 10% |
| 40 µm | ≥ 50% |

### Maltodextrin DE 6 (Vergleichsversuche zu DE 10 2016 002 279 A1):

**Tabelle 1F: Maltodextrin DE 6**

| | Agenamalt 20.222 |
|---|---|
| Hersteller | Agrana Stärke |
| Trockenmasse (TM) | Ca. 95% |
| Dextrose Äquivalent | 18 - 20 Gew% in TM |
| Schüttgewicht | 450 g/l - 600 g/l |
| Korngröße > 0,4 | max. 0,5 |

### Maltodextrin DE 19 (Vergleichsversuche zu DE 10 2016 002 279 A1):

**Tabelle 1G: Maltodextrin DE 19**

| | Agenamalt 20.226 |
|---|---|
| Hersteller | Agrana Stärke |
| Trockenmasse (TM) | Ca. 95% |
| Dextrose Äquivalent | 5 - 8 Gew% in TM |
| Schüttgewicht | 360 g/l - 460 g/l |
| Korngröße > 0,4 | max. 0,5 |

### Vorverkleisterte Wachsmaisstärke:

**Tabelle 1H: vorverkleisterte Wachsmaisstärke**

| | Quemina 21.214 |
|---|---|
| Hersteller | Agrana Stärke |
| Trockenmasse | Ca. 94% |
| Quellzahl | Ca. 14 g H₂O/g Quellstärke |
| Korngröße | Max. 5 % > 0,5 mm |
| Schüttgewicht | 400 - 520 g/l |
| pH-Wert | Ca. 7,0 |
| Viskosität (Brookfield, 7,5%ig TS) | 500 mPa*s - 800 mPa*s |

| | |
|---|---|
| Ohne Füllstoff: | Eis wird ohne den Zusatz von Füllstoff hergestellt (Negativkontrolle) |

Die Herstellung der Milcheissorten wie z.B. Vanilleeis erfolgte mit folgenden Schritten:
- Trockene Komponenten werden vermengt.
- Flüssige Komponenten werden vermengt.
- Die trockenen Komponenten werden in die Flüssigen eingerührt. Danach wird die Mischung für 2 Minuten bei 3000 UpM gerührt.
- Nun wird der Eismix auf 85°C erhitzt und nach Erreichen der Temperatur, für 1 Minute gehalten.
- Der Eismix wird auf 30°C abgekühlt und in die Eismaschine überführt und bei einer Wandtemperatur von -8°C eingefroren.
- Die Lagerung des Eises erfolgte bei -18°C.

Die Herstellung der Fruchteissorten wie z.B. Zitroneneis erfolgte mit folgenden Schritten:
- Trockene Komponenten werden vermengt.
- Flüssige Komponenten werden vermengt.
- Die trockenen Komponenten werden in die Flüssigen eingerührt. Danach wird die Mischung für 2 Minuten bei 3000 UpM gerührt.
- Der Eismix wird in die Eismaschine überführt und bei -8°C eingefroren.
- Die Lagerung des Eises erfolgte bei -18°C.

Im Folgenden werden das so hergestellte Vanilleeis und das so hergestellte Zitroneneis mit den verschiedenen Füllstoffen verschiedenen Analysen unterzogen, bei welchem die Parameter Luftaufschlag, Luftbläschenverteilung, Eiskristalle, Viskosität, Festigkeit, Melt down und die Sensorik untersucht wurden.

### Luft im Speiseeis:

Luft gehört zu den Hauptbestandteilen von Speiseeis. Während des Gefriervorganges wird Luft eingearbeitet und es bilden sich Luftblasen. In Handwerksspeiseeis beträgt der Luftaufschlag (Overrun) üblicherweise 25%.

Die Verteilung der Luftbläschen hängt mit der Cremigkeit im Mund zusammen. Je kleiner die Luftbläschen, desto cremiger wird das Speiseeis wahrgenommen (Eisner et al., Coll. Surf. A 263 (2005), 390-399). Wie sehr sich die Luftbläschen verkleinern, hängt mit der Rührleistung während der Herstellung zusammen und ist von der Viskosität, der Fließresistenz des Eismixes und von der Verformbarkeit des Speiseeis-Slurrys abhängig (Sofjan and Hartel, Int. Dairy J. 14 (2004), 255-262).

Üblicherweise führt eine Viskositätserhöhung des Speiseeismixes zu kleineren Luftbläschen (Den Engelsen et al., AUTEX Res. J. 2 (2002), 14-27).

Die angewandten Methoden sind im Buch von Clarke The Science of Ice Cream (2004, S. 77 und Kapitel 6) beschrieben.

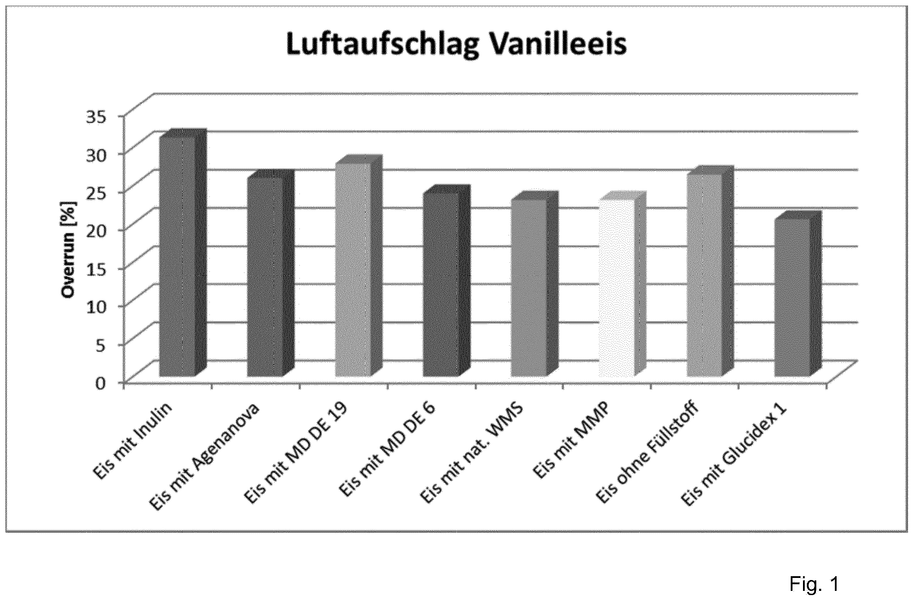

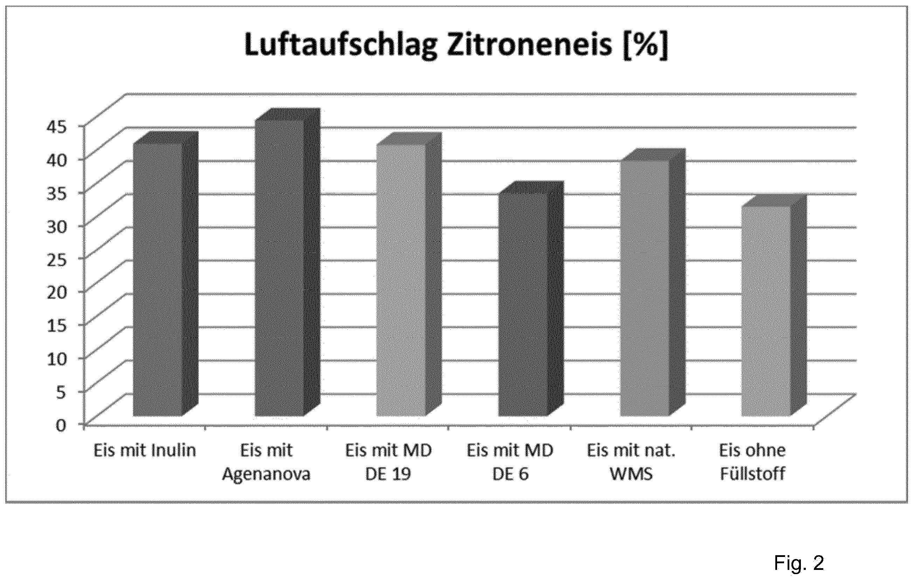

Die Ergebnisse bei der Untersuchung des Luftaufschlages (Overrun) sind in den folgenden Tabellen 2A und 2B sowie in Fig. 1 und Fig. 2 dargestellt:

**Tabelle 2A: Luftaufschlag im Vanilleeis mit unterschiedlichen Füllstoffen**

| **Vanilleeis** | **Luftaufschlag [%]** |
|---|---|
| Eis mit Inulin | 31,3 |
| Eis mit Agenanova | 25,99 |
| Eis mit MD DE 19 | 27,88 |
| Eis mit MD DE 6 | 23,99 |
| Eis mit nat. WMS | 23,14 |
| Eis mit MMP | 23,12 |
| Eis ohne Füllstoff | 26,47 |
| Eis mit MD DE 1 | 20,59 |

**Tabelle 2B: Luftaufschlag im Zitroneneis mit unterschiedlichen Füllstoffen**

| **Zitroneneis** | **Luftaufschlag [%]** |
|---|---|
| Eis mit Inulin | 40,9 |
| Eis mit Agenanova | 44,4 |
| Eis mit MD DE 19 | 40,76 |
| Eis mit MD DE 6 | 33,44 |
| Eis mit nat. WMS | 38,36 |
| Eis ohne Füllstoff | 31,51 |

Das Ausmaß des Luftaufschlags ist abhängig vom Maschinentyp. Der übliche, natürliche Luftaufschlag (Overrun) im Handwerksspeiseeisbereich liegt bei 25%. Ein hoher Lufteinschlag bewirkt auch eine größere Menge an fertigem Eis was letztlich auch mehr Umsatz bedeutet. Aus diesem Grund je höher der Luftaufschlag, desto vorteilhafter. Unter dieser Betrachtung führt Maltodextrin DE1 (Glucidex 1) im hergestellten Speiseeis zu keiner optimalen Luftaufschlagsmenge.

### Luftbläschenverteilung im Vanilleeis:

Die Verteilung der Lufteinschlüsse im Eis ist ausschlaggebend für die Cremigkeit.

Aus diesem Grund wurde die Größe der Lufteinschlüsse im Vanilleeis mit Hilfe des Mikroskops bestimmt.

Methode: Das bei -18°C gelagerte Speiseeis wurde dünn auf einem Objektträger aufgetragen und mit Glycerin beschichtet, um das Ineinanderrinnen der Luftbläschen zu verhindern, und anschließend bei 10x Vergrößerung beobachtet (Clarke C., 2004).

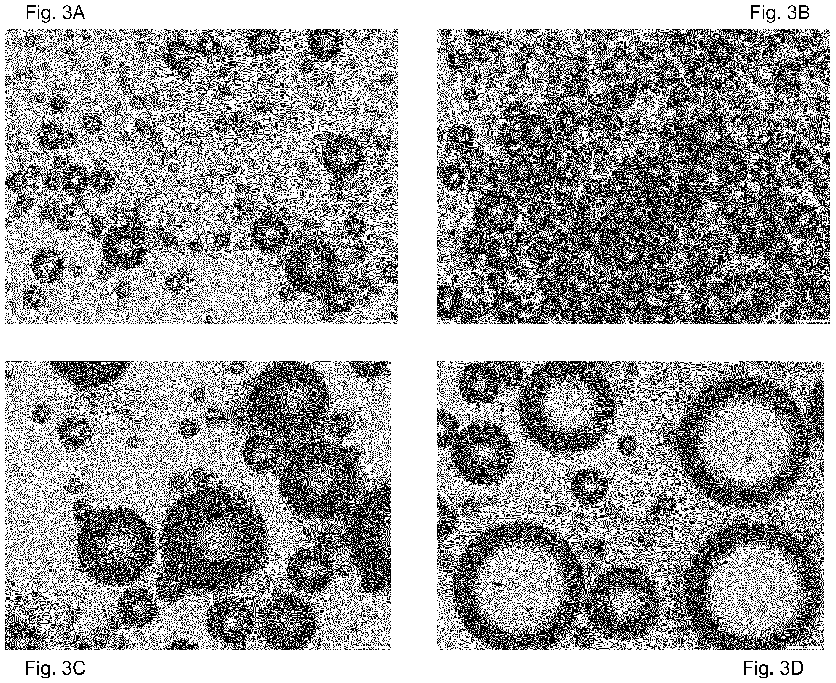

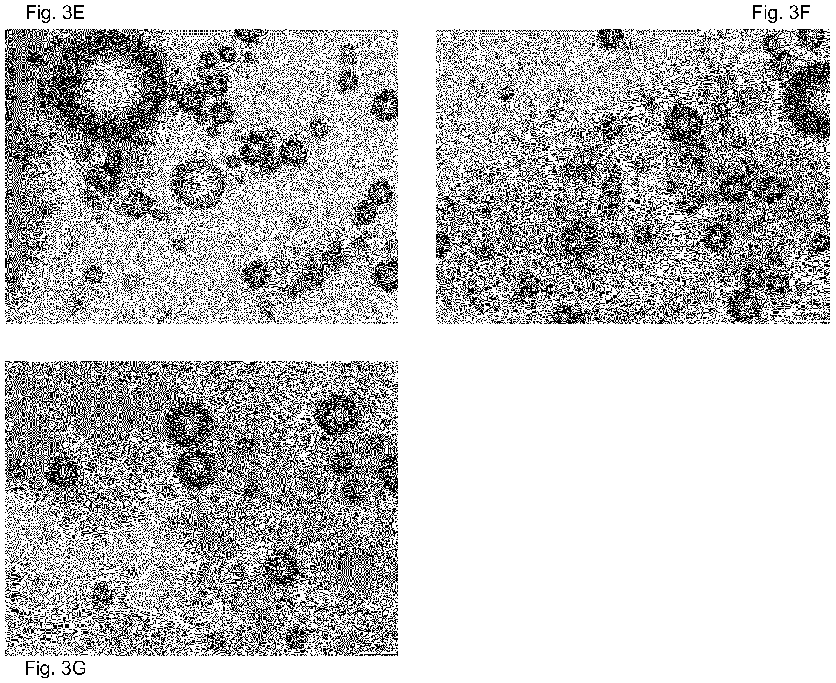

Die Ergebnisse sind in den Figuren 3A bis 3G dargestellt. Maltodextrin DE 6 (Fig. 3D) und DE 19 (Fig. 3C) zeigen große Lufteinschlüsse. Maltodextrin DE1 (Fig. 3B) sowie Wachsmaisstärke (Fig. 3G, 21.214) zeigen eine höhere Viskosität und kleinere Lufteinschlüsse. Inulin (Fig. 3E) und Magermilchpulver (Fig. 3F) zeigen eine ähnliche Verteilung, wobei Inulin eine inhomogenere Verteilung zeigt.

EMS (Fig. 3A) zeigt eine optimale Verteilung, nämlich feine Lufteinschlüsse, wie sie bei hochviskosen Flüssigkeiten auftreten, obwohl es zu keiner signifikanten Erhöhung der Viskosität kommt.

### Eiskristalle:

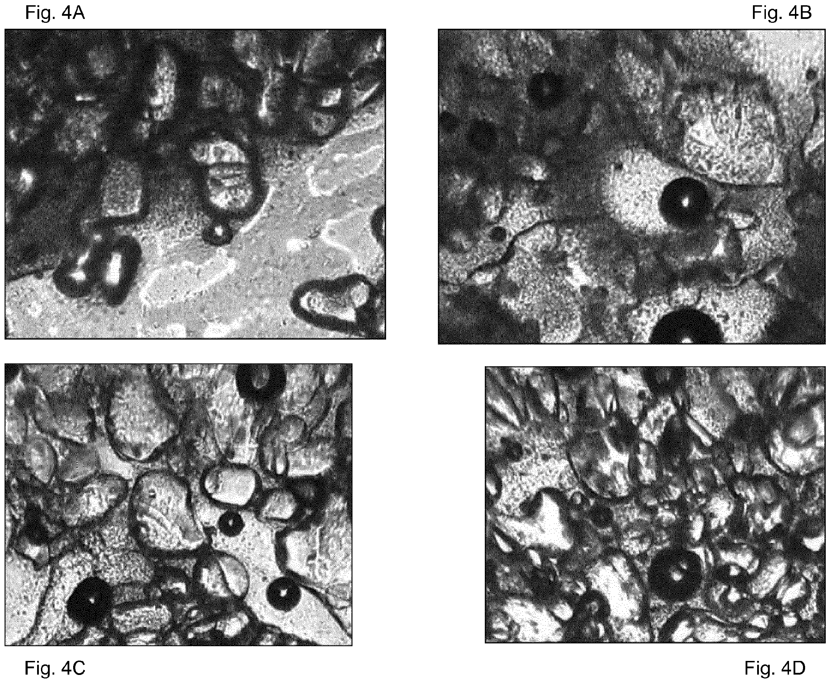

Die Eiskristalle im Vanilleeis wurden durch mikroskopische Aufnahmen bei -18°C und 100-facher Vergrößerung untersucht. Die Ergebnisse sind in den Figuren 4A bis 4H dargestellt.

EMS (Fig. 4A) führt zur Ausbildung von kleinen Eiskristallen, was zu einer Erhöhung der Cremigkeit, zu einem optimalen Mundgefühl und einer glatten Oberfläche führt.

Maltodextrin DE1 (Fig. 4B) begünstigt die Bildung von großen Eiskristallen, was sensorisch zu einem rauen Mundgefühl führen.

Maltodextrin DE19 (Fig. 4C) zeigt eine inhomogene Kristallgrößenverteilung, die von großen Eiskristallen bis hin zu feinen Eiskristallen reicht. Dies wirkt auf die Sensorik negativ aus.

Maltodextrin DE6 (Fig. 4D) führt zu einer inhomogenen Kristallgrößenverteilung im Speiseeis, die in der Sensorik ebenfalls zu geringerer Cremigkeit sowie zu negativen Empfindungen führt.

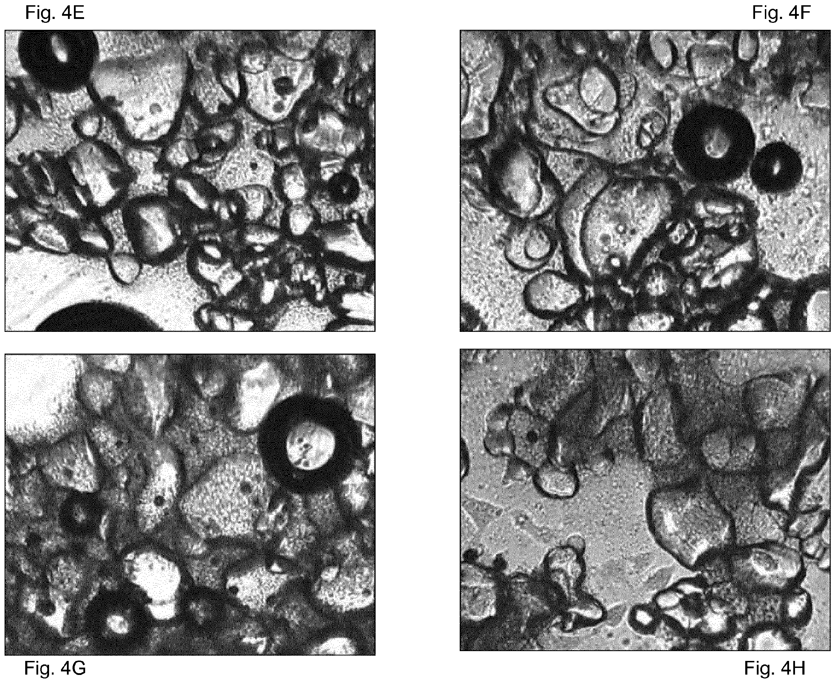

Die native WMS (Fig. 4E) zeigt eine feine Eiskristallverteilung mit der Ausbildung von vereinzelt großen Eiskristallen.

Inulin (Fig. 4F) führt zu einer inhomogenen Eiskristallgrößenverteilung.

Beim Magermilchpulver (Fig. 4G) ist die Bildung von mittelgroßen bis großen Eiskristallen ausgeprägt.

Fehlender Füllstoff (Fig. 4H) führt überwiegend zu größeren Eiskristallen, was auch sensorisch detektiert werden kann.

Für eine optimale Sensorik sind feine Eiskristalle im Speiseeis notwendig. Die gewünschten feinen Eiskristalle konnten mit EMS und mit der nativen Maisquellstärke erreicht werden.

Um sensorisch eine Akzeptanz zu gewähren ist ein hoher Feinkristallanteil zwingend erforderlich. Dies konnte z.B. mit Inulin erzielt werden. Magermilchpulver, Maltodextrine mit DE 19 und DE 6 sowie das füllstofflose Speiseeis führten zu einer inhomogenen Verteilung der Kristallgröße. Je ausgeprägter die großen Eiskristalle sind, desto rauer ist die sensorische Empfindung. Mit Maltodextrin DE1 im Speiseeis konnten vorwiegend Eiskristalle im deutlich größeren Bereich erzielt werden, was sich sensorisch als nachteilig erwies.

### Viskosität:

Die Viskosität der Eismasse des Vanilleeises wurde am Rheometer bei 25°C bestimmt. Die Messung wurde mit dem Rheometer Anton Paar Physica MCR301 mit Hilfe des Messbechers CC26/ST-SS und des Messkörpers ST24-2D/2V/2V-30 durchgeführt. Die Viskosität (η [mPa*s]) wurde durch eine logarithmische Änderung der Drehzahl von 1/min - 1000/min bestimmt. Dabei wurde die Viskosität bei 100 UpM abgelesen.

Die Ergebnisse sind in der nachfolgenden Tabelle 3 dargestellt:

**Tabelle 3: Viskositätsmessung im Speiseeis mit unterschiedlichen Füllstoffen**

| **Getestetes Produkt im Speiseeis** | **Viskosität bei 100 UpM [mPa*s]** |
|---|---|
| Maltodextrin DE 19 | 46,37 |
| Glucidex 1 | 61,93 |
| EMS (Agenanova 30.326) | 46,39 |
| Nat. WMS | 250,45 |
| Magermilchpulver | 70,43 |
| Ohne Füllstoff | 43,88 |
| Inulin | 55,67 |
| Maltodextrin DE 6 | 53,21 |

Es zeigte sich, dass mit der erfindungsgemäßen EMS eine Viskosität erzielbar ist, die nahe der Viskosität ohne Füllstoff liegt und in etwa der von Maltodextrin DE 19 entspricht. Die erfindungsgemäß erzielbare Viskosität liegt deutlich unter Inulin (und Maltodextrin DE 6), und noch deutlicher unter Maltodextrin DE 1 und Magermilchpulver. WMS weist eine nochmals deutlich gesteigerte Viskosität auf.

Eine signifikant höhere Viskosität als 70 mPa*s (gemessen bei 100 UpM) ist aufgrund der Ausbildung von zu viel Körper für die Eisherstellung nicht geeignet. Sensorisch führte die hohe Viskosität des geschmolzenen Eises zu einer starken Beeinträchtigung der Geschmackswahrnehmung. In der angeführten Rezeptur liegt das Optimum der Eisgrundmasse zwischen 45 mPa*s und 70 mPa*s (gemessen bei 100 UpM).

### Festigkeit

Für die Bestimmung der Festigkeit wurde das -18°C kalte Speiseeis (Vanilleeis) herangezogen. Dabei wurde mit Hilfe des Texture Analyzers (TA.XT.PLUS STable Micro System) die Festigkeit des Eises bestimmt, wobei die von Kacara et al. (Int. J. Dairy Techn. 62 (2009), 93-99) beschriebene Methode gemäß den Parametern unten (s. auch: Tabelle 4A) etwas adaptiert wurde. Hierbei taucht ein Messkörper mit definierter Geschwindigkeit in die Probe ein bis die definierte Eintauchtiefe erreicht ist. Dabei wird die Kraft, ausgedrückt in Gramm [g], die die Probe auf den Messkörper überträgt, gemessen. Die maximal ausgelöste Kraft wird zur Beurteilung der Festigkeit des Eises herangezogen.

Das Eis wurde in Kristallisierschalen (Durchmesser ca. 5cm, Höhe ca. 3cm) abgefüllt und für eine Woche bei -18°C eingefroren.

Die Messung wurde sofort nach der Entnahme der Probe aus dem Gefrierschrank durchgeführt.

### Parameter:

**Tabelle 4A: Parameter bei der Festigkeitsbestimmung**

| | |
|---|---|
| **Test Art** | Druck |
| **Vorgeschwindigkeit** | 2mm/sec |
| **Test Geschwindigkeit** | 1mm/sec |
| **Rückgeschwindigkeit** | 2mm/sec |
| **Ziel Parameter** | Weg |
| **Weg** | 10mm |
| **Auslösewert** | Auto (Kraft) |
| **Auslöse Kraft** | 5g |
| **Messwerkzeug** | P/5 5mm DIA Cylinder Stainless |

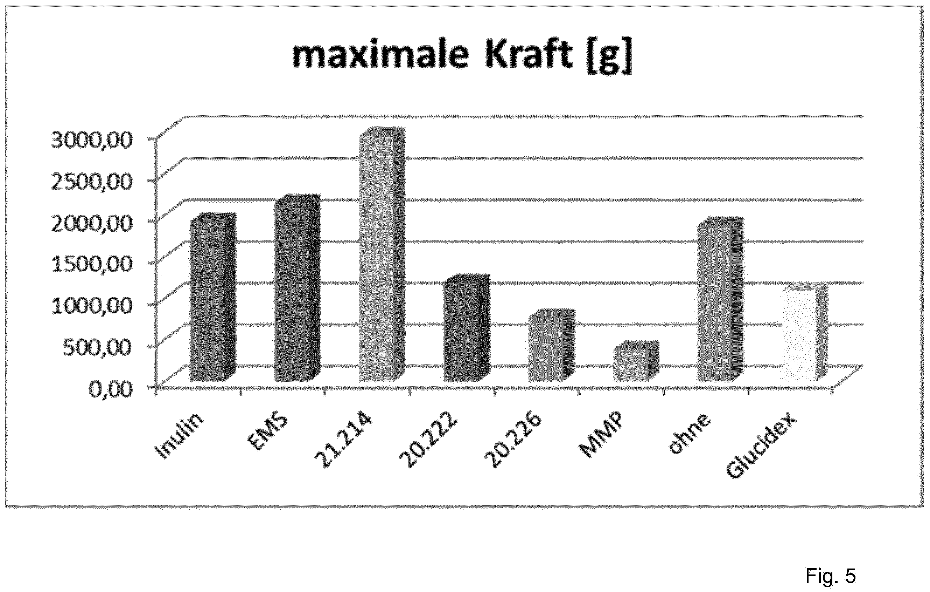

Die Ergebnisse sind in der nachfolgenden Tabelle 4B und in Fig. 5 dargestellt. Die Schwankung der Messung liegt bei ca. 15%.

**Tabelle 4B: Festigkeit des untersuchten Vanilleeises mit unterschiedlichen Füllstoffen.**

| **Vanilleeis mit** ... **als Füllstoff** | **max. Kraft [g]** |
|---|---|
| Inulin | 1925 |
| Agenanova 30.326 | 2145 |
| Wachsmaisquellstärke | 2952 |
| Maltodextrin DE19 | 1184 |
| Maltodextrin DE6 | 765 |
| Magermilchpulver | 381 |
| Ohne Füllstoff | 1876 |
| Glucidex 1 | 1093 |

Es zeigte sich, dass die Verwendung von enzymatisch modifizierter Stärke die gleiche Festigkeit im Speiseeis zur Folge hatte wie die Verwendung von Inulin bzw. die Nichtverwendung von Füllstoff. Magermilchpulver führte zum weichsten Speiseeis gefolgt von Maltodextrin DE6. Die Festigkeit vom Speiseeis mit Maltodextrin DE1 (Glucidex 1) und mit Maltodextrin DE19 liegt in der Mitte der getesteten Füllstoffe. Die Wachsmaisquellstärke führt im Speiseeis zum festesten Produkt, was zu einem großen Nachteil bei der Portionierung des Speiseeises führt.

Der Einsatz von Magermilchpulver führt zu einem sehr weichen Eisprodukt. Die geringe Festigkeit hat zwar positive Effekte beim Portionieren, jedoch verliert das Speiseeis während des Antauens sehr schnell die Form. Durch die weiche Textur kann man das Eis mit geringem Kraftaufwand portionieren, was ein Vorteil von Magermilchpulver, gefolgt von den getesteten Maltodextrinen, ist.
Mit dem Einsatz von etwas mehr Kraft als bei den Maltodextrinen kann das Speiseeis mit den Füllstoffen Inulin, EMS und ohne Einsatz von Füllstoffen portioniert werden. Die Festigkeit, die eine gemessene maximale Kraft von ≤2.200 g aufweist, ist geeignet, um die Portionierung des Speiseeises ohne Schwierigkeiten zu bewältigen. Eine signifikant höhere maximale Kraft als 2.200 g, wie bei der nativen Wachsmaisquellstärke gemessen wurde, ist aufgrund der hohen Festigkeit im gefrorenen Zustand für die Eisherstellung nicht geeignet.

### Melt down:

Der Luftaufschlag (overrun) beeinflusst auch das Schmelzverhalten des Eises. Je höher der Luftaufschlag (overrun) desto langsamer schmilzt das Eis. Auch die Größe der Luftbläschen beeinflusst das Schmelzverhalten. Kleine Lufteinschlüsse begünstigen die langsame Schmelzbarkeit des Eises (Sakurai et al. (Milchwiss. 51 (1996), 451-454); Goff & Hartel, 2013).

Der Luftaufschlag sowie die Größenverteilung der Lufteinschlüsse werden unter anderem von der Viskosität beeinflusst.

Methode: In einem temperierten Raum wird ein definiertes Volumen Speiseeis auf ein Gitter gelegt. Unter dem Gitter befindet sich ein Becherglas, das auf einer Waage liegt. Die Masse des geschmolzenen Eises wird im Laufe der Zeit notiert (Clarke, 2004) .

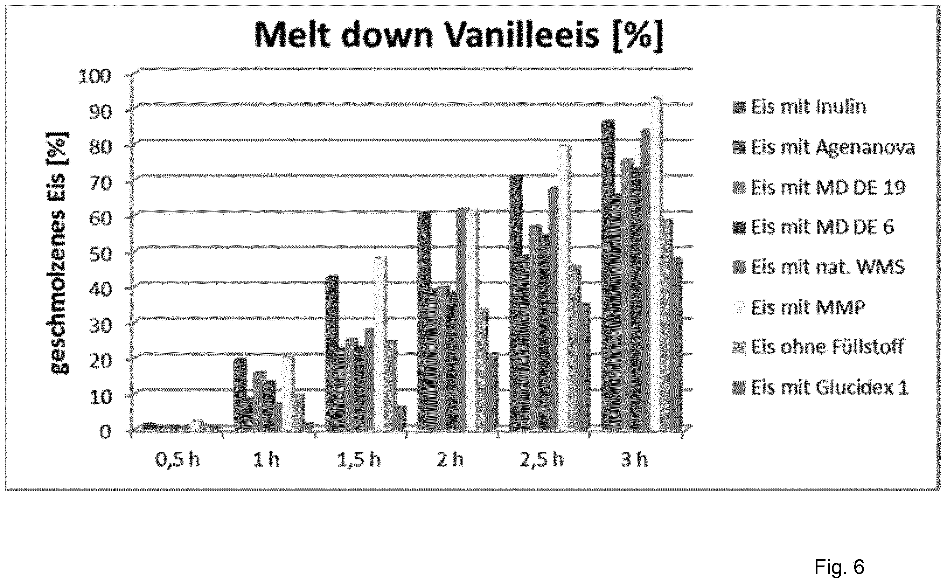

Die Ergebnisse sind in Fig. 6 dargestellt. Es zeigte sich, dass Eis mit dem erfindungsgemäßen Füllstoff deutlich langsamer schmilzt als Eis mit Inulin (jedenfalls > 1h), Maltodextrin DE 19, Maltodextrin DE6 und Magermilchpulver und etwa im Bereich liegt, den das Eis ohne Füllstoffe hat. Lediglich Eis mit Maltodextrin DE 1 schmilzt noch langsamer als das erfindungsgemäße Eis bzw. Eis ohne jeglichen Füllstoff.

### Zusammenfassung physikalische Parameter:

In der nachfolgenden Tabelle 5 wurden die verschiedenen oben gemessenen Parameter zusammengefasst. Es zeigte sich insgesamt, dass das erfindungsgemäße Speiseeis bei den meisten Parametern vergleichbar oder besser als die mit herkömmlichen Füllstoffen hergestellten Speiseeise ist. Sogar im Vergleich mit Inulin als Füllstoff weist das erfindungsgemäße Speiseeis vergleichbare oder bessere Werte auf. Gleichzeitig ist das erfindungsgemäße Speiseeis in keinem der Parameter unterdurchschnittlich oder weist einen Wert auf, der sich negativ auf eine kommerzielle Verwertung auswirken könnte.

**Tabelle 5: Gesamt-Ergebnis physikalische Parameter**

| | Overrun | Overrun | Luftbläschen | Kristall- | | | | |
|---|---|---|---|---|---|---|---|---|
| | Vanille | Zitrone | Verteilung | größe | Viskosität | Festigkeit | Melt down | Ergebnis |
| Inulin | ++ | ++ | + | - | ++ | + | - | 3,0 |
| Agenanova | + | +++ | ++ | + | ++ | + | ++ | 2,3 |
| DE1 | - | nd | ++ | -- | + | + | +++ | 3,2 |
| DE6 | - | - | - | - | ++ | + | + | 3,4 |
| DE19 | + | ++ | - | - | ++ | + | + | 3,0 |
| MMP | - | nd | ++ | - | - | - | -- | 3,8 |
| qWMS | - | + | ++ | + | - | - | - | 3,4 |
| OF | + | - | nd | - | ++ | + | ++ | 3,2 |
| | | | | | | | | |
| | | | | | | | | |
| -- | 5 | | | | | | | |
| - | 4 | | | OF | Inulin | Agenanova | | |
| + | 3 | | | 3,2 | 3,0 | 2,3 | | |
| ++ | 2 | | | | | | | |
| +++ | 1 | | | | | | | |

Bei einer Gesamt-Gewichtung der Parameter zeigt sich, dass das erfindungsgemäße Speiseeis allen Vergleichsproben überlegen ist (2,3) und daher eine neue Benchmark darstellt.

### Sensorik:

Es wurden insgesamt 4 unterschiedliche Eissorten (Vanille, Cappuccino, Zitrone und Erdbeere (s. vorne, Tabelle 1A; "Vanilleeis" bzw. "Milcheis") sensorisch von insgesamt 10 geschulten Panellisten beurteilt. Für die Beurteilung wurde eine beschreibende Methode, der "Pivot-Test", eingesetzt (Thuillier et al., Food Qual. Pref. 42 (2015), 66-77). Beim Pivot-Test wird eine Referenz/"Pivot" definiert und die Unterschiede zwischen dem Standard und dem getesteten Produkt beschrieben. Es werden die Merkmale genannt, die stärker oder schwächer ausgeprägt sind im Vergleich zum Referenzprodukt. Dabei wurde als Produktstandard/"Pivot" jeweils das Speiseeis herangezogen, das mit Inulin hergestellt wurde.

Die sensorische Beurteilung erfolgte bei max. -14°C. Die Ergebnisse sind in der nachfolgenden Tabelle 6 dargestellt:

**Tabelle 6: Ergebnisse der Sensorik der Speiseeissorten Vanille, Zitrone, Cappuccino und Erdbeere mit unterschiedlichen Füllstoffen**

| **Getestetes Produkt im Speiseeis** | **weniger/schwächer als mit Inulin** | **Mehr/stärker als mit Inulin** |
|---|---|---|
| Maltodextrin DE 19 | Weniger Geschmack | Süßer |
| | | Größere Eiskristalle |
| Maltodextrin DE 6 | Weniger Süß | Langzügiger |
| | Weniger Geschmack | Mehr Kristalle |
| | Weniger cremig | Wässriger |
| | | Fester |
| EMS (Agenanova 30.326) | Weniger langzügig | Glattere Oberfläche |
| | Weniger Kristalle | |
| Nat. WMS | Weniger Kristalle | Cremiger |
| | Weniger Geschmack | Vollmundiger |
| | | Fester |
| | | Klebriger |
| Magermilchpulver | Weniger Geschmack | Milchgeschmack |
| | | Cremiger |
| Ohne Füllstoff | | Weicher |
| | | Wässriger |
| | | Große Wasserkristalle |

Insgesamt konnte daher sensorisch kein Nachteil des erfindungsgemäßen Eises im Vergleich zu Eis mit Inulin als Füllstoff festgestellt werden, jedoch wurden eine signifikant glattere Oberfläche sowie kleinere Eiskristalle von den Probanden festgestellt. Die Geschmacksbeeinträchtigung der getesteten Füllstoffe im Speiseeis kann man auf die erhöhte Viskosität z.B. beim Magermilchpulver sowie auf den Aufbau der Polyglucane z.B. bei den Standardstärkeprodukten zurückführen. EMS zeigt sensorisch aufgrund der hohen Verzweigung und geringen und einheitlichen Molgrößenverteilung sowie aufgrund der geringen Ausbildung von Viskositäten einen deutlichen Vorteil gegenüber den anderen getesteten Füllstoffen.

Ein sensorischer Vergleich von Eis mit EMS und Eis mit Glucidex (Maltodextrin DE1) ergab, dass Eis mit EMS nicht so klebrig, aber weicher ist als Eis mit Maltodextrin DE1 und mehr Lufteinschlüsse hat als Eis mit Maltodextrin DE1.

Die gesamten Ergebnisse sind in der nachfolgenden Tabelle 7 dargestellt:

**Tabelle 7: Gesamt-Ergebnisse der Sensorik mit unterschiedlichen Füllstoffen**

| Versus | | | | | | | | |
|---|---|---|---|---|---|---|---|---|
| Inulineis | Geschmack | Eiskristalle | Cremigkeit | Festigkeit | Klebrigkeit | Eisoberfläche | Langzügigkeit | Ergebnis |
| Inulineis | = | = | = | = | = | = | = | 3,0 |
| Agenanova | = | + | = | = | = | + | + | 2,6 |
| DE1 | nd | nd | nd | nd | nd | = | nd | nd |
| DE6 | - | - | - | - | = | = | - | 3,7 |
| DE19 | - | - | = | = | = | = | = | 3,4 |
| MMP | - | = | + | = | = | = | = | 3,0 |
| qWMS | - | + | + | - | - | = | = | 3,1 |
| OF | = | -- | = | + | = | = | = | 3,1 |
| | | | | | | | | |
| | | | | | | | | |
| -- | 5 | | | | OF | Inulin | EMS | |
| - | 4 | | | | 3,1 | 3,0 | 2,6 | |
| = | 3 | | | | | | | |
| + | 2 | | | | | | | |
| ++ | 1 | | | | | | | |

Auch hier zeigt sich im Gesamt-Ergebnis, dass das erfindungsgemäße Speiseeis den besten Wert aufweist (2,6) und damit sensorisch deutlich besser beurteilt wurde als z.B. Inulin oder MMP als Füllstoff (3,0)

### Literatur:

Clarke, C., 2004. The Science of Ice Cream.
Den Engelsen, C.W., Isarin, J. C., Gooijer, H., Warmoeskerken, M.M.C.G., and Groot Wassink, J., 2002. Bubble size distribution of foam. AUTEX Research J. 2, 14-27
Eisner, M.D., Wildmoser, H., and Windhab, E, J., 2005. Air cell microstructuring in a high viscous ice cream matrix. Colloids and Surfaces A: Physicochemical and Engineering Aspects. 236, 390-399.
Goff, H.D., and Hartel R.W., 2013. Ice Cream. Seventh Edition. New York: Springer, Kapitel Air Cells, 333-336
Karaca, O.B., Güven, M., Yasar, K., Kaya, S.and Kahyaoglu, T., 2009, The functional, rheological and sensory characteristics of ice creams with various fat replacers. International Journal of Dairy Technology 62 (2009), 93-99
Sakurai, K., Kokubo, S., Hakamata, K., Tomita, M., and Yoshida, s., 1996. Effect of production conditions on ice cream melting resistance and hardness. Milchwissenschaft. 51(8), 451-454.
Sofjan, R.P., and Hartel, R.W., Int. Dairy J. 14 (2004), 255-262.
Thuillier, B., Valentin, D., Marchal, R. and Dacremont, C., 2015. Pivot© profile: A new descriptive method based on free description. Food Quality and Preference 42, 66-77.

## Patentansprüche

1. Eifreies Speiseeis, umfassend eine enzymatisch verzweigte Stärke, wobei die Stärke
- ein mittleres Molekulargewicht Mw (Gewichtsmittel), gemessen durch Lichtstreuung, von 60 kDa bis 3000 kDa, und
- einen Polydispersitätsindex PDI zwischen 1 und 5 aufweist.

2. Eifreies Speiseeis nach Anspruch 1, wobei die Stärke ein mittleres Molekulargewicht Mw (Gewichtsmittel), gemessen durch Lichtstreuung, von mindestens 70 kDa, vorzugsweise 90 kDa, und/oder von bis zu 2500 kDa, vorzugsweise bis zu 2000 kDa, bis zu 1500 kDa, bis zu 1000 kDa, bis zu 800 kDa, bis zu 600 kDa, bis zu 400 kDa, bis zu 200 kDa, bis zu 150 kDa, bis zu 140 kDa, bis zu 135 kDa, bis zu 130 kDa, bis zu 125
kDa, hat.

3. Eifreies Speiseeis nach Anspruch 1 oder 2, wobei die Stärke einen DE (Dextroseequivalent)-Wert von maximal 1 aufweist.

4. Eifreies Speiseeis nach einem der Ansprüche 1 bis 3, wobei die Stärke einen mittleren Verzweigungsgrad von alpha-1,6-Verzweigungen von 4 bis 12% aufweist und/oder im Wesentlichen nur alpha-1,6-glykosidische Verzweigungen aufweist.

5. Eifreies Speiseeis nach einem der Ansprüche 1 bis 4, wobei die Stärke enzymatisch verzweigte Wachsmaisstärke, Maisstärke, Kartoffelstärke, Amylopektin-Kartoffelstärke, Reisstärke, Weizenstärke, Tapiokastärke oder Sagostärke ist, vorzugsweise enzymatisch verzweigte Wachsmaisstärke.

6. Eifreies Speiseeis nach einem der Ansprüche 1 bis 5, wobei der Anteil der in einem der Ansprüche 1 bis 5 definierten Stärke mindestens 50% des gesamten Stärkeanteils des Speiseeises ausmacht.

7. Eifreies Speiseeis nach einem der Ansprüche 1 bis 6, wobei die Stärke durch ein Verzweigungsenzym, vorzugsweise ein Verzweigungsenzym von Rhodothermus sp., modifiziert ist, welches den Verzweigungsgrad im Vergleich zu unmodifizierter Stärke erhöht und/oder die Polydispersität im Vergleich zu unmodifizierter Stärke erniedrigt, insbesondere wobei das Verzweigungsenzym eine 1,4-α-D-glucan: 1,4-α-D-glucan 6-α-D-(1,4-α-D-glucano)-transferase ist (E.C. 2.4.1.18).

8. Eifreies Speiseeis nach einem der Ansprüche 1 bis 7, wobei die Stärke im Wesentlichen frei von niedermolekularen Oligosacchariden mit einem Polymerisationsgrad von kleiner als 3 ist, vorzugsweise wobei der Anteil der niedermolekularen Oligosaccharide weniger als 5 Gew.-% der Stärkemasse ist.

9. Eifreies Speiseeis nach einem der Ansprüche 1 bis 8, wobei das Speiseeis ausgewählt ist aus Vanilleeis, Zitroneneis, Amarettoeis, Ananaseis, Apfeleis, Aprikoseneis, Apfelstrudeleis, Bananeneis, Brownieeis, Birneneis, Brombeereis, Buttermilcheis, Basilikumeis, Casheweis, Cheesecakeeis, Caipirinhaeis, Cassiseis, Eierpunscheis, Eierliköreis, Erdbeereis, Erdnusseis, Fioccoeis, Grapefruiteis, Haferflockeneis, Haselnusseis, Heidelbeereis, Himbeereis, Holunder(blüten)eis, Joghurteis, Kaffeeeis, Karameleis, Kirscheis, Kiwieis, Kokoseis, Käsesahneeis, Kürbiseis, Limetteneis, Macadamiaeis, Malagaeis, Mandarineneis, Mangoeis, Maracujaeis, Marilleneis, Maronieis, Marzipaneis, Mandeleis, Mascarponeeis, Meloneneis, Mohneis, Minzeis, Nougateis, Nusseis, Orangeneis, Pfirsicheis, Pina Colada-Eis, Pistazieneis, Preiselbeereis, Pekannusseis, Pinienkerneis, Pralineneis, Quitteneis, Ribiseleis, Rüblieis, Rum-Krokanteis, Roseneis, Sanddorneis, Schokoladeneis, Stracciatellaeis, Sahnejoghurteis, Sauerrahmeis, Schmandeis, Schwarzwälder-Kirscheis, Schafsmilcheis, Tiramisueis, Topfeneis, Traubeneis, Trüffeleis, Tonkabohneneis, Weichseleis, Walnusseis, Wassermeloneneis, Weintraubeneis, Zwetschkeneis, Ziegenmilcheis, Zitroneneis, Zimteis, oder Mischungen davon.

10. Eifreies Speiseeis nach einem der Ansprüche 1 bis 9, wobei das Speiseeis ausgewählt ist aus Vanille, Erdbeer, Zitrone, Apfel oder Mischungn davon.

11. Verfahren zur Herstellung eines eifreien Speiseeis nach einem der Ansprüche 1 bis 10, umfassend die Schritte:
- Bereitstellen einer enzymatisch verzweigten Stärke, wobei die Stärke ein mittleres Molekulargewicht Mw (Gewichtsmittel), gemessen durch Lichtstreuung, von 60 kDa bis 3000 kDa, und einen Polydispersitätsindex PDI zwischen 1 und 5 aufweist,
- Bereitstellen von Speiseeiskomponenten,
- Vermengen der Speiseeiskomponenten und der enzymatisch verzweigten Stärke, gegebenenfalls unter Erhitzen, wobei ein Speiseeis-Mix erhalten wird,
- Einfrieren des Speiseeis-Mix durch Abkühlen auf eine geeignete Temperatur und für einen geeigneten Zeitraum, so dass ein Speiseeis entsteht.

12. Verfahren nach Anspruch 11, wobei der Speiseeis-Mix auf eine Temperatur von zumindest 60°C, vorzugsweise von zumindest 70°C, insbesondere von zumindest 80°C, erhitzt wird.

13. Verfahren nach Anspruch 11 oder 12, wobei der Speiseeis-Mix in eine Eismaschine überführt wird und bei einer Wandtemperatur von zumindest -3°C, vorzugsweise von zumindest -5°C, insbesondere von zumindest -8°C, eingefroren wird.

14. Verfahren nach einem der Ansprüche 11 bis 13, wobei die bereitgestellten Speiseeiskomponenten teilweise in flüssiger Form vorliegen und teilweise in fester Form, wobei vorzugsweise zunächst die trockenen Komponenten miteinander vermengt werden und die flüssigen Komponenten miteinander vermengt werden, worauf die vermengten trockenen Komponenten in die vermengten flüssigen Komponenten unter Erhalt eingerührt werden, wobei der Speiseeis-Mix erhalten wird.

15. Verfahren nach einem der Ansprüche 11 bis 14, wobei das Vermengen der Speiseeiskomponenten und der enzymatisch verzweigten Stärke unter Rühren bei zumindest 1000 Umdrehungen pro Minute (UpM), vorzugsweise bei zumindest 2000 UpM, insbesondere bei zumindest 3000 UpM, erfolgt.

## Claims

1. Egg-free ice cream comprising an enzymatically branched starch, wherein the starch has
- a weight-average molecular weight Mw (weight average), measured by light scattering, of 60 kDa to 3000 kDa, and
- a polydispersity index PDI between 1 and 5.

2. Egg-free ice cream according to claim 1, wherein the starch has an average molecular weight Mw (weight average), measured by light scattering, of at least 70 kDa, preferably 90 kDa, and/or up to 2500 kDa, preferably up to 2000 kDa, up to 1500 kDa, up to 1000 kDa, up to 800 kDa, up to 600 kDa, up to 400 kDa, up to 200 kDa, up to 150 kDa, up to 140 kDa, up to 135 kDa, up to 130 kDa, or up to 125 kDa.

3. Egg-free ice cream according to either claim 1 or claim 2, wherein the starch has a DE (dextrose equivalent) value of at most 1.

4. Egg-free ice cream according to any of claims 1 to 3, wherein the starch has an average degree of branching of alpha-1,6 branches of 4 to 12% and/or has substantially only alpha-1,6 glycosidic branches.

5. Egg-free ice cream according to any of claims 1 to 4, wherein the starch is enzymatically branched waxy corn starch, corn starch, potato starch, amylopectin potato starch, rice starch, wheat starch, tapioca starch or sago starch, preferably enzymatically branched waxy corn starch.

6. Egg-free ice cream according to any of claims 1 to 5, wherein the content of the starch defined in any of claims 1 to 5 makes up at least 50% of the total starch content of the ice cream.

7. Egg-free ice cream according to any of claims 1 to 6, wherein the starch is modified by a branching enzyme, preferably a branching enzyme from Rhodothermus sp., which increases the degree of branching compared with unmodified starch and/or lowers the polydispersity compared with unmodified starch, in particular wherein the branching enzyme is a 1,4-α-D-glucan: 1,4-α-D-glucan is 6-α-D-(1,4-α-D-glucano)transferase (E.C.2.4.1.18).

8. Egg-free ice cream according to any of claims 1 to 7, wherein the starch is substantially free of low-molecular-weight oligosaccharides having a degree of polymerization of less than 3, preferably wherein the content of low-molecular-weight oligosaccharides is less than 5 wt.% of the starch mass.

9. Egg-free ice cream according to any of claims 1 to 8, wherein the ice cream is selected from vanilla ice cream, lemon ice cream, amaretto ice cream, pineapple ice cream, apple ice cream, apricot ice cream, apple strudel ice cream, banana ice cream, brownie ice cream, pear ice cream, blackberry ice cream, buttermilk ice cream, basil ice cream, cashew ice cream, cheesecake ice cream, caipirinha ice cream, cassis ice cream, egg punch ice cream, eggnog ice cream, strawberry ice cream, peanut ice cream, fiocco ice cream, grapefruit ice cream, oatmeal ice cream, hazelnut ice cream, blueberry ice cream, raspberry ice cream, elderberry (elderflower) ice cream, yogurt ice cream, coffee ice cream, caramel ice cream, cherry ice cream, kiwi ice cream, coconut ice cream, pumpkin ice cream, lime ice cream, macadamia ice cream, Malaga ice cream, mandarin ice cream, mango ice cream, passion fruit ice cream, chestnut ice cream, marzipan ice cream, almond ice cream, mascarpone ice cream, melon ice cream, poppyseed ice cream, mint ice cream, nougat ice cream, nut ice cream, orange ice cream, peach ice cream, piña colada ice cream, pistachio ice cream, cranberry ice cream, pecan nut ice cream, pine nut ice cream, praline ice cream, quince ice cream, currant ice cream, carrot ice cream, rum brittle ice cream, rose ice cream, sea buckthorn ice cream, chocolate ice cream, stracciatella ice cream, cream yoghurt ice cream, sour cream ice cream, smetana ice cream, Black Forest cherry ice cream, sheep milk ice cream, tiramisu ice cream, curd ice cream, grape ice cream, truffle ice cream, tonka bean ice cream, sour cherry ice cream, walnut ice cream, watermelon ice cream, plum ice cream, goat milk ice cream, lemon ice cream, cinnamon ice cream, or mixtures thereof.

10. Egg-free ice cream according to any of claims 1 to 9, wherein the ice cream is selected from vanilla, strawberry, lemon, apple, or mixtures thereof.

11. Method for producing an egg-free ice cream according to any of claims 1 to 10, comprising the steps of:
- providing an enzymatically branched starch, wherein the starch has an average molecular weight Mw (weight average), measured by light scattering, of 60 kDa to 3000 kDa, and a polydispersity index PDI between 1 and 5,
- providing ice cream components,
- mixing the ice cream components and the enzymatically branched starch, optionally with heating, wherein an ice cream mix is obtained,
- freezing the ice cream mix by cooling to a suitable temperature and for a suitable period of time so that an ice cream is produced.

12. Method according to claim 11, wherein the ice cream mix is heated to a temperature of at least 60 °C, preferably of at least 70 °C, in particular of at least 80 °C.

13. Method according to either claim 11 or claim 12, wherein the ice cream mix is transferred to an ice cream machine and is frozen at a wall temperature of at least -3 °C, preferably at least -5 °C, in particular at least -8 °C.

14. Method according to any of claims 11 to 13, wherein some of the ice cream components provided are in liquid form and some are in solid form, wherein preferably first the dry components are mixed together and the liquid components are mixed together, whereupon the mixed dry components are stirred into the mixed liquid components to obtain the ice cream mix.

15. Method according to any of claims 11 to 14, wherein the ice cream components and the enzymatically branched starch are mixed with stirring at at least 1000 revolutions per minute (rpm), preferably at at least 2000 rpm, in particular at at least 3000 rpm.

## Revendications

1. Glace alimentaire sans œuf, comprenant un amidon ramifié par voie enzymatique, l'amidon présentant
- une masse moléculaire moyenne Mw (moyenne en poids), mesurée par dispersion de la lumière, de 60 kDa à 3 000 kDa,
- un indice de polydispersité PDI compris entre 1 et 5.

2. Glace alimentaire sans œuf selon la revendication 1, l'amidon ayant une masse moléculaire moyenne Mw (moyenne en poids), mesurée par dispersion de la lumière, d'au moins 70 kDa, de préférence de 90 kDa, et/ou d'un maximum de 2 500 kDa, de préférence d'un maximum de 2 000 kDa, à 1 500 kDa, à 1 000 kDa, à 800 kDa, à 600 kDa, à 400 kDa, à 200 kDa, à 150 kDa, à 140 kDa, à 135 kDa, à 130 kDa, à 125 kDa.

3. Glace alimentaire sans œuf selon la revendication 1 ou 2, l'amidon présentant une valeur DE (dextrose équivalent) maximale de 1.

4. Glace alimentaire sans œuf selon l'une des revendications 1 à 3, l'amidon présentant un degré de ramification de ramifications alpha-1,6 de 4 à 12 % et/ou sensiblement uniquement des ramifications alpha-1,6-glucosidiques.

5. Glace alimentaire sans œuf selon l'une des revendications 1 à 4, l'amidon étant de l'amidon de maïs cireux, de l'amidon de maïs, de l'amidon de pomme de terre, de l'amidon amylopectine de pomme de terre, de l'amidon de riz, de l'amidon de blé, de l'amidon de tapioca ou de l'amidon de sagou ramifié par voie enzymatique, de préférence de l'amidon de maïs cireux ramifié par voie enzymatique.

6. Glace alimentaire sans œuf selon l'une des revendications 1 à 5, la part de l'amidon défini dans l'une des revendications 1 à 5 représentant au moins 50 % de la part d'amidon totale de la glace alimentaire.

7. Glace alimentaire sans œuf selon l'une des revendications 1 à 6, l'amidon étant modifié par une enzyme de ramification, de préférence une enzyme de ramification du Rhodothermus sp., lequel augmente le degré de ramification par rapport à l'amidon non modifié et/ou diminue la polydispersité par rapport à l'amidon non modifié, l'enzyme de ramification étant notamment une 1,4-α-D-glucane : 1,4-α-D-glucane 6-α-D-(1,4-α-D-glucano)-transférase (E.C. 2.4.1.18).

8. Glace alimentaire sans œuf selon l'une des revendications 1 à 7, l'amidon étant sensiblement exempt d'oligosaccharides à faible poids moléculaire avec un degré de polymérisation inférieur à 3, la part d'oligosaccharides à faible poids moléculaire étant de préférence inférieure à 5 % massiques de la masse d'amidon.

9. Glace alimentaire sans œuf selon l'une des revendications 1 à 8, la glace étant sélectionnée parmi la glace à la vanille, la glace au citron, la glace à l'amaretto, la glace à l'ananas, la glace aux pommes, la glace à l'abricot, la glace au strudel aux pommes, la glace à la banane, la glace au brownie, la glace à la poire, la glace à la mûre, la glace au babeurre, la glace au basilic, la glace à la noix de cajou, la glace au fromage blanc, la glace à la caïpirinha, la glace au cassis, la glace au punch aux œufs, la glace à la liqueur aux œufs, la glace à la fraise, la glace aux arachides, la glace au Fiocco, la glace au pamplemousse, la glace aux flocons d'avoine, la glace à la noisette, la glace à la myrtille, la glace à la framboise, la glace au (baies de) sureau, la glace au yaourt, la glace au café, la glace au caramel, la glace à la cerise, la glace au kiwi, la glace à la noix de coco, la glace à la crème de fromage, la glace au potiron, la glace au citron vert, la glace au macadamia, la glace à la malaga, la glace à la mandarine, la glace à la mangue, la glace au fruit de la passion, la glace à l'abricot, la glace au marron, la glace au massepain, la glace aux amandes, la glace au mascarpone, la glace au melon, la glace aux graines de pavot, la glace à la menthe, la glace au nougat, la glace aux noix, la glace à l'orange, la glace à la pêche, la glace à la pina colada, la glace à la pistache, la glace à la canneberge, la glace aux noix de pécan, la glace aux pignons, la glace au praliné, la glace au coing, la glace à la groseille, la glace à la betterave, la glace au croquant au rhum, la glace à la rose, la glace aux baies d'argousier, la glace au chocolat, la glace Stracciatella, la glace au yaourt à la crème, la glace à la crème acidulée, la glace à la crème aigre, la glace à la cerise de forêt noire, la glace au lait de brebis, la glace au tiramisu, la glace au lait caillé, la glace aux raisins secs, la glace à la truffe, la glace à la fève tonka, la glace aux cerises aigres, la glace aux noix, la glace à la pastèque, la glace aux raisins, la glace à la prune, la glace au lait de chèvre, la glace au citron, la glace à la cannelle, ou leurs mélanges.

10. Glace alimentaire sans œuf selon l'une des revendications 1 à 9, la glace alimentaire étant sélectionnée parmi la vanille, la fraise, le citron, la pomme ou leurs mélanges.

11. Procédé de production d'une glace alimentaire sans œuf selon l'une des revendications 1 à 10, comprenant les étapes suivantes :
- fourniture d'un amidon ramifié par voie enzymatique, l'amidon présentant une masse moléculaire moyenne Mw (moyenne en poids), mesurée par dispersion de la lumière, de 60 kDa à 3 000 kDa, un indice de polydispersité PDI compris entre 1 et 5,
- fourniture de composants de glace alimentaire,
- mélange des composants de glace alimentaire et de l'amidon ramifié par voie enzymatique, le cas échéant avec chauffage, un mélange pour glace alimentaire étant obtenu,
- congélation du mélange pour glace alimentaire par refroidissement à une température appropriée et pendant une durée appropriée, de sorte qu'une glace alimentaire est produite.

12. Procédé selon la revendication 11, le mélange pour glace alimentaire étant chauffé à une température d'au moins 60 °C, de préférence d'au moins 70 °C, notamment d'au moins 80 °C.

13. Procédé selon la revendication 11 ou 12, le mélange pour glace alimentaire étant transféré dans une sorbetière et étant congelé à une température de paroi d'au moins -3 °C, de préférence d'au moins -5 °C, notamment d'au moins -8 °C.

14. Procédé selon l'une des revendications 11 à 13, les composants de glace alimentaire fournis se présentant en partie sous forme liquide et en partie sous forme solide, en commençant de préférence par mélanger les composants secs entre eux et les composants liquides entre eux, après quoi les composants secs mélangés sont délayés par agitation dans les composants liquides mélangés en les conservant, le mélange pour glace alimentaire étant ainsi obtenu.

15. Procédé selon l'une des revendications 11 à 14, le mélange des composants de glace alimentaire et de l'amidon ramifié par voie enzymatique étant effectué sous agitation à au moins 1 000 tours par minute (tr/min), de préférence à au moins 2 000 tr/min, notamment à au moins 3 000 tr/min.
